# EUROPEAN PATENT APPLICATION

(11) **EP 4 704 412 A1**
(43) Date of publication of application: **04.03.2026**
(21) Application number: 24795722.8
(22) Date of filing: 25.03.2024
(51) Int. Cl.: H04L 69/00, H04W 64/00, H04W 4/029

(54) **INFORMATION TRANSMISSION METHOD AND APPARATUS, DEVICE, AND MEDIUM**

(30) Priority: 26.04.2023 CN 202310464141
(71) Applicant: Datang Mobile Communications Equipment Co., Ltd., Beijing 100085 (CN)
(72) Inventor: CAI, Yu, Beijing 100085 (CN); GONG, Qiusha, Beijing 100085 (CN)
(74) Representative: Studio Torta S.p.A.
(86) International application number: PCT/CN2024/083478
(87) International publication number: WO 2024/222339

(57) **Abstract**

This application provides a method, an apparatus, a device, and a medium for information transmission, belonging to the field of communication technologies.

The information transmission method includes: generating, by a first communication device, a sensing protocol protocol data unit (PDU), wherein the sensing protocol PDU comprises sensing protocol layer information; and transmitting, by the first communication device, the sensing protocol PDU to a second communication device, wherein the sensing protocol PDU is transmitted through one of the following transmission manners: a radio resource control (RRC) message, a service data adaptation protocol (SDAP) service data unit (SDU), or a packet data convergence protocol (PDCP) service data unit (SDU).

## Description

### CROSS-REFERENCE TO RELATED APPLICATIONS

This application claims priority to Chinese Patent Application No. 202310464141.8 filed in China on April 26, 2023, entitled "Information Transmission Method, Apparatus, Device, and Medium " , the entire contents of which are incorporated herein by reference.

### TECHNICAL FIELD

The present disclosure relates to the field of communication technology, and in particular to an information transmission method, apparatus, device, and medium.

### BACKGROUND

Communication and sensing integration (also referred to as communication-sensing integration or communication and sensing convergence) refers to a technology that achieves unified design of communication and sensing functions by means such as joint design of air interfaces and protocols, reuse of time-frequency-space resources, and sharing of hardware devices. This allows a wireless network to perform sensing functions while conducting communication interactions, thereby improving overall network performance and service capability.

In related technologies, to support the communication and sensing integration function, base stations and user equipment (User Equipment, UE) in a network are required to transmit and/or receive sensing signals. During a sensing process in which the UE participates, a base station transmits sensing measurement configuration information to the UE, where the information includes a sensing signal measurement quantity and a sensing result reporting mode. After obtaining a result of the sensing signal measurement quantity, the UE transmits a sensing measurement report to the base station, where the sensing measurement report includes the result of the sensing signal measurement quantity.

Control information (for example, the sensing measurement configuration information) and data (for example, the result of the sensing signal measurement quantity) related to sensing between the base station and the UE are transmitted through radio resource control (Radio Resource Control, RRC) signaling. The sensing function and the radio resource control function are coupled together, which increases the complexity of the RRC protocol and reduces the readability of the protocol.

### SUMMARY

The purpose of the present disclosure is to provide an information transmission method, apparatus, device, and medium, so as to solve a problem that the integration of communication and sensing signals in related technologies leads to poor readability of a radio resource control (RRC) protocol.

To achieve the above purpose, in a first aspect, an embodiment of the present disclosure provides an information transmission method, which is applied to a first communication device, and the method includes:
generating a sensing protocol protocol data unit (PDU), wherein the sensing protocol PDU includes sensing protocol layer information;
transmitting the sensing protocol PDU to a second communication device; wherein the sensing protocol PDU is transmitted through one of the following transmission manners:
   an RRC message;
   a service data adaptation protocol (SDAP) service data unit (SDU);
   a packet data convergence protocol (PDCP) service data unit (SDU).

In some embodiments, in a case that the sensing protocol PDU is transmitted through the RRC message, the transmitting the sensing protocol PDU to the second communication device includes:
transmitting the RRC message including the sensing protocol PDU to the second communication device; or,
in a case that the sensing protocol PDU is transmitted through the SDAP SDU, the transmitting the sensing protocol PDU to the second communication device includes:
   transmitting an SDAP PDU carrying the SDAP SDU to the second communication device, where the sensing protocol PDU is the SDAP SDU; or,
   in a case that the sensing protocol PDU is transmitted through the PDCP SDU, the transmitting the sensing protocol PDU to the second communication device includes:
   transmitting a PDCP PDU carrying the PDCP SDU to the second communication device, where the sensing protocol PDU is the PDCP SDU.

In some embodiments, the transmitting the sensing protocol PDU to the second communication device includes:
transmitting the sensing protocol PDU to the second communication device through a first radio bearer (RB), where the first RB is a dedicated RB used for transmitting the sensing protocol PDU. The sensing protocol layer information includes sensing control information and sensing data, and the sensing protocol PDU includes a first-type sensing protocol PDU and a second-type sensing protocol PDU;
wherein the first-type sensing protocol PDU is used to carry the sensing control information, and the second-type sensing protocol PDU is used to carry the sensing data.

In some embodiments, the first RB is an RB corresponding to a type of the sensing protocol PDU, or the first RB is an RB corresponding to sensing data carried by the sensing protocol PDU, or the first RB is an RB corresponding to a QoS flow of the sensing protocol PDU.

In some embodiments, the first type of sensing protocol PDU and the second type of sensing protocol PDU are transmitted through a same transmission manner among the transmission manners; or, the first type of sensing protocol PDU and the second type of sensing protocol PDU are transmitted through different transmission manners among the transmission manners.

In some embodiments, the RRC message is an uplink information transfer message or a downlink information transfer message.

In some embodiments, in a case that the sensing protocol PDU is transmitted through an RRC message, transmitting, through a first radio bearer (RB), the sensing protocol PDU to a second communication device comprises:
submitting the RRC message to a PDCP entity associated with the first RB, where the RRC message is a PDCP service data unit (SDU);
processing, through the PDCP entity associated with the first RB, the PDCP SDU to obtain a PDCP protocol data unit (PDU);
transmitting the PDCP PDU to the second communication device.

In some embodiments, in a case that the sensing protocol PDU is transmitted through an SDAP SDU, transmitting, through the first RB, the sensing protocol PDU to the second communication device comprises:
submitting the SDAP PDU to a PDCP entity associated with the first RB, where the SDAP PDU is a PDCP SDU;
processing, through the PDCP entity associated with the first RB, the PDCP SDU to obtain a PDCP PDU;
transmitting the PDCP PDU to the second communication device.

In some embodiments, in a case that the sensing protocol PDU is transmitted through a PDCP SDU, transmitting, through the first RB, the sensing protocol PDU to the second communication device comprises:
submitting the sensing protocol PDU to a PDCP entity associated with the first RB, where the sensing protocol PDU is a PDCP SDU;
processing, through the PDCP entity associated with the first RB, the PDCP SDU to obtain a PDCP PDU;
transmitting the PDCP PDU to the second communication device.

In some embodiments, before submitting the SDAP PDU to the PDCP entity associated with the first RB, the method further comprises:
submitting the sensing protocol PDU to an SDAP entity, where the sensing protocol PDU is an SDAP SDU;
processing, through the SDAP entity, the SDAP SDU to obtain an SDAP PDU.

In some embodiments, the SDAP SDU is the SDAP PDU; or,
the SDAP PDU comprises the SDAP SDU and an SDAP header; wherein, the SDAP header comprises at least one of the following:
an indication for updating a mapping relationship between a quality of service (QoS) flow and an RB;
a QoS flow identifier;
a sensing protocol PDU type identifier.

In some embodiments, the PDCP SDU is the PDCP PDU; or,
the PDCP PDU comprises the PDCP SDU and a PDCP header; wherein, the PDCP header comprises a PDCP sequence number.

In some embodiments, before transmitting, through the first RB, the sensing protocol PDU to the second communication device, the method further comprises:
adding or modifying the first RB according to parameters associated with the first RB.

In some embodiments, the method further comprises:
determining parameters associated with the first RB;
transmitting, to the second communication device, first indication information, wherein the first indication information is used to indicate parameters associated with the first RB, the first communication device is a base station, and the second communication device is a terminal.

In some embodiments, the method further comprises:
receiving, from the second communication device, first indication information, wherein the first indication information is used to indicate parameters associated with the first RB, the first communication device is a terminal, and the second communication device is a base station.

In some embodiments, adding the first RB according to parameters associated with the first RB comprises:
in a case that the sensing protocol PDU is an SDAP SDU, establishing a PDCP entity associated with the first RB, setting PDCP parameters, associating the first RB with an SDAP entity, and setting SDAP parameters according to the parameters associated with the first RB; or,
in a case that the sensing protocol PDU is a PDCP SDU, establishing a PDCP entity associated with the first RB and setting PDCP parameters according to the parameters associated with the first RB.

In some embodiments, modifying the first RB according to the parameters associated with the first RB comprises:
configuring PDCP parameters and/or configuring SDAP parameters according to the parameters associated with the first RB, wherein the configuring comprises setting or reconfiguring.

In some embodiments, the parameters associated with the first RB comprise at least one of the following:
parameters of a PDCP entity associated with the first RB;
parameters of an SDAP entity associated with the first RB;
an identifier of the first RB;
the first RB being a default RB.

In some embodiments, the parameters of the SDAP entity comprise at least one of the following:
a mapping relationship between a QoS flow and an RB;
a mapping relationship between a sensing protocol PDU type and an RB;
existence of an SDAP header;
absence of an SDAP header.

In some embodiments, the method further comprises:
in a case that transmission of the sensing protocol PDU is not needed, releasing the first RB; transmitting, to the second communication device, second indication information, wherein the second indication information is used to indicate release of the first RB, the first communication device is a base station, and the second communication device is a terminal; or,
receiving, from the second communication device, second indication information, wherein the second indication information is used to indicate release of the first RB; releasing the first RB according to the second indication information; wherein the first communication device is a terminal, and the second communication device is a base station.

In some embodiments, releasing the first RB comprises:
in a case that the sensing protocol PDU is an SDAP SDU, releasing the first RB and the association between the first RB and an SDAP entity;
in a case that the sensing protocol PDU is a PDCP SDU, releasing the first RB.

To achieve the above objective, in a second aspect, embodiments of the present disclosure further provide an information transmission method applied to a second communication device, comprising:
receiving a sensing protocol protocol data unit (PDU) transmitted by a first communication device, wherein the sensing protocol PDU comprises sensing protocol layer information;
the sensing protocol PDU being transmitted through one of the following transmission manners:
   an RRC message;
   a service data adaptation protocol (SDAP) service data unit (SDU);
   a packet data convergence protocol (PDCP) service data unit (SDU).

In some embodiments, in a case that the sensing protocol PDU is transmitted through an RRC message, receiving the sensing protocol PDU transmitted by the first communication device comprises:
receiving an RRC message transmitted by the first communication device, where the RRC message comprises the sensing protocol PDU; or,
in a case that the sensing protocol PDU is transmitted through an SDAP SDU, receiving the sensing protocol PDU transmitted by the first communication device comprises:
   receiving an SDAP PDU transmitted by the first communication device, where the SDAP PDU carries an SDAP service data unit (SDU), and the sensing protocol PDU is the SDAP SDU; or,
   in a case that the sensing protocol PDU is transmitted through a PDCP SDU, receiving the sensing protocol PDU transmitted by the first communication device comprises:
   receiving a PDCP PDU transmitted by the first communication device, where the PDCP PDU carries a PDCP service data unit (SDU), and the sensing protocol PDU is the PDCP SDU.

In some embodiments, receiving the sensing protocol PDU transmitted by the first communication device comprises:
receiving, through a first radio bearer (RB), the sensing protocol PDU transmitted by the first communication device, wherein the first RB is a dedicated RB for transmitting the sensing protocol PDU.

In some embodiments, the sensing protocol layer information comprises sensing control information and sensing data, and the sensing protocol PDU comprises a first type of sensing protocol PDU and a second type of sensing protocol PDU;
wherein the first type of sensing protocol PDU is used to carry the sensing control information, and the second type of sensing protocol PDU is used to carry the sensing data.

In some embodiments, the first RB is an RB corresponding to a type of the sensing protocol PDU; or, the first RB is an RB corresponding to sensing data carried by the sensing protocol PDU; or, the first RB is an RB corresponding to a QoS flow of the sensing protocol PDU.

In some embodiments, the first type of sensing protocol PDU and the second type of sensing protocol PDU are transmitted through a same transmission manner among the transmission manners; or, the first type of sensing protocol PDU and the second type of sensing protocol PDU are transmitted through different transmission manners among the transmission manners.

In some embodiments, the RRC message is an uplink information transfer message or a downlink information transfer message.

In some embodiments, in a case that the sensing protocol PDU is transmitted through an RRC message, receiving, through the first RB, the sensing protocol PDU transmitted by the first communication device comprises:
receiving a PDCP PDU transmitted by the first communication device;
processing, through a PDCP entity associated with the first RB, the PDCP PDU to obtain a PDCP SDU;
submitting the PDCP SDU to an RRC layer, where the PDCP SDU is an RRC message, and processing, through the RRC layer, the RRC message to obtain the sensing protocol PDU.

In some embodiments, in a case that the sensing protocol PDU is transmitted through an SDAP SDU, receiving, through the first RB, the sensing protocol PDU transmitted by the first communication device comprises:
receiving a PDCP PDU transmitted by the first communication device;
processing, through a PDCP entity associated with the first RB, the PDCP PDU to obtain a PDCP SDU;
submitting the PDCP SDU to an SDAP entity, where the PDCP SDU is an SDAP PDU;
processing, through the SDAP entity, the SDAP PDU to obtain an SDAP SDU, where the SDAP SDU is the sensing protocol PDU.

In some embodiments, in a case that the sensing protocol PDU is transmitted through a PDCP SDU, receiving, through the first radio bearer (RB), the sensing protocol PDU transmitted by the first communication device comprises:
receiving a PDCP PDU transmitted by the first communication device;
processing, through a PDCP entity associated with the first RB, the PDCP PDU to obtain a PDCP SDU, where the PDCP SDU is the sensing protocol PDU.

In some embodiments, the SDAP SDU is the SDAP PDU; or,
the SDAP PDU comprises the SDAP SDU and an SDAP header; wherein, the SDAP header comprises at least one of the following:
an indication for updating a mapping relationship between a quality of service (QoS) flow and an RB;
a QoS flow identifier;
a sensing protocol PDU type identifier.

In some embodiments, the PDCP SDU is the PDCP PDU; or,
the PDCP PDU comprises the PDCP SDU and a PDCP header; wherein, the PDCP header comprises a PDCP sequence number.

In some embodiments, before receiving, through the first RB, the sensing protocol protocol data unit (PDU) transmitted by the first communication device, the method further comprises:
adding or modifying the first RB according to parameters associated with the first RB.

In some embodiments, the method further comprises:
determining parameters associated with the first RB;
transmitting, to the first communication device, first indication information, wherein the first indication information is used to indicate parameters associated with the first RB, and the first communication device is a terminal, and the second communication device is a base station.

In some embodiments, the method further comprises:
receiving first indication information transmitted by the first communication device, wherein the first indication information is used to indicate parameters associated with the first RB, the first communication device is a base station, and the second communication device is a terminal.

In some embodiments, adding the first RB according to parameters associated with the first RB comprises:
in a case that the sensing protocol PDU is an SDAP SDU, establishing a PDCP entity associated with the first RB, setting PDCP parameters, associating the first RB with an SDAP entity, and setting SDAP parameters according to the parameters associated with the first RB; or,
in a case that the sensing protocol PDU is a PDCP SDU, establishing a PDCP entity associated with the first RB and setting PDCP parameters according to the parameters associated with the first RB.

In some embodiments, modifying the first RB according to parameters associated with the first RB comprises:
configuring PDCP parameters and/or configuring SDAP parameters according to the parameters associated with the first RB, wherein the configuring comprises setting or reconfiguring.

In some embodiments, the parameters associated with the first RB comprise at least one of the following:
parameters of a PDCP entity associated with the first RB;
parameters of an SDAP entity associated with the first RB;
an identifier of the first RB;
the first RB being a default RB.

In some embodiments, the parameters of the SDAP entity comprise at least one of the following:
a mapping relationship between a QoS flow and an RB;
a mapping relationship between a sensing protocol PDU type and an RB;
existence of an SDAP header;
absence of an SDAP header;
a default RB.

In some embodiments, the method further comprises:
in a case that transmission of the sensing protocol PDU is not needed, releasing the first RB; transmitting, to the first communication device, second indication information, wherein the second indication information is used to indicate release of the first RB, and the first communication device is a terminal, and the second communication device is a base station; or,
receiving, from the first communication device, second indication information, wherein the second indication information is used to indicate release of the first RB; releasing the first RB according to the second indication information, wherein the first communication device is a base station, and the second communication device is a terminal.

In some embodiments, releasing the first RB comprises:
in a case that the sensing protocol PDU is an SDAP SDU, releasing the first RB and the association between the first RB and an SDAP entity;
in a case that the sensing protocol PDU is a PDCP SDU, releasing the first RB.

To achieve the above objective, in a third aspect, embodiments of the present disclosure further provide a communication device, the communication device being a first communication device, comprising: a memory, a transceiver, and a processor; the memory being configured to store a computer program; the transceiver being configured to transmit and receive data under control of the processor; and the processor being configured to read the computer program in the memory and execute the following operations:
generating a sensing protocol protocol data unit (PDU), wherein the sensing protocol PDU comprises sensing protocol layer information;
transmitting, to a second communication device, the sensing protocol PDU; wherein, the sensing protocol PDU is transmitted through one of the following transmission manners:
   an RRC message;
   a service data adaptation protocol (SDAP) service data unit (SDU);
   a packet data convergence protocol (PDCP) service data unit (SDU).

In some embodiments, the transceiver is further configured to:
in a case that the sensing protocol PDU is transmitted through an RRC message, transmit, to the second communication device, the RRC message, wherein the RRC message comprises the sensing protocol PDU; or,
in a case that the sensing protocol PDU is transmitted through an SDAP SDU, transmit, to the second communication device, an SDAP PDU, wherein the SDAP PDU carries an SDAP SDU, and the sensing protocol PDU is the SDAP SDU;
in a case that the sensing protocol PDU is transmitted through a PDCP SDU, transmit, to the second communication device, a PDCP PDU, wherein the PDCP PDU carries a PDCP SDU, and the sensing protocol PDU is the PDCP SDU.

In some embodiments, the transceiver is further configured to:
transmit, through a first radio bearer (RB), the sensing protocol PDU to the second communication device, wherein the first RB is a dedicated RB for transmitting the sensing protocol PDU.

In some embodiments, the sensing protocol layer information comprises sensing control information and sensing data, and the sensing protocol PDU comprises a first type of sensing protocol PDU and a second type of sensing protocol PDU;
wherein the first type of sensing protocol PDU is used to carry the sensing control information, and the second type of sensing protocol PDU is used to carry the sensing data.

In some embodiments, the first type of sensing protocol PDU and the second type of sensing protocol PDU are transmitted through a same transmission manner among the transmission manners; or, the first type of sensing protocol PDU and the second type of sensing protocol PDU are transmitted through different transmission manners among the transmission manners.

In some embodiments, the processor is further configured to:
add or modify the first radio bearer (RB) according to parameters associated with the first RB.

In some embodiments, the processor is further configured to:
in a case that the sensing protocol PDU is an SDAP service data unit (SDU), establish a packet data convergence protocol (PDCP) entity associated with the first RB, set PDCP parameters, associate the first RB with an SDAP entity, and set SDAP parameters according to the parameters associated with the first RB; or,
in a case that the sensing protocol PDU is a PDCP SDU, establish a PDCP entity associated with the first RB and set PDCP parameters according to the parameters associated with the first RB.

In some embodiments, the processor is further configured to:
configure PDCP parameters and/or configure SDAP parameters according to the parameters associated with the first RB, wherein the configuring comprises setting or reconfiguring.

To achieve the above objective, in a fourth aspect, embodiments of the present disclosure further provide an information transmission apparatus, comprising:
a first processing unit, configured to generate a sensing protocol protocol data unit (PDU), wherein the sensing protocol PDU comprises sensing protocol layer information;
a first transmitting unit, configured to transmit the sensing protocol PDU to a second communication device; wherein, the sensing protocol PDU is transmitted through one of the following transmission manners:
   a radio resource control (RRC) message;
   a service data adaptation protocol (SDAP) service data unit (SDU);
   a packet data convergence protocol (PDCP) service data unit (SDU).

To achieve the above objective, in a fifth aspect, embodiments of the present disclosure further provide a communication device, the communication device being a second communication device, comprising: a memory, a transceiver, and a processor; the memory being configured to store a computer program; the transceiver being configured to transmit and receive data under control of the processor; and the processor being configured to read the computer program in the memory and execute the following operations:
receiving, through the transceiver, a sensing protocol protocol data unit (PDU) transmitted by a first communication device, wherein the sensing protocol PDU comprises sensing protocol layer information;
the sensing protocol PDU being transmitted through one of the following transmission manners:
   an RRC message;
   an SDAP service data unit (SDU);
   a PDCP service data unit (SDU).

In some embodiments, the transceiver is further configured to:
in a case that the sensing protocol PDU is transmitted through an RRC message, receive, from the first communication device, a radio resource control (RRC) message, wherein the RRC message comprises the sensing protocol PDU; or,
in a case that the sensing protocol PDU is transmitted through an SDAP SDU, receive, from the first communication device, an SDAP protocol data unit (PDU), wherein the SDAP PDU carries an SDAP SDU, and the sensing protocol PDU is the SDAP SDU; or,
in a case that the sensing protocol PDU is transmitted through a PDCP SDU, receive, from the first communication device, a PDCP protocol data unit (PDU), wherein the PDCP PDU carries a PDCP SDU, and the sensing protocol PDU is the PDCP SDU.

In some embodiments, the transceiver is further configured to:
receive, through a first radio bearer (RB), the sensing protocol PDU transmitted by the first communication device, wherein the first RB is a dedicated RB for transmitting the sensing protocol PDU.

In some embodiments, the sensing protocol layer information comprises sensing control information and sensing data, and the sensing protocol PDU comprises a first type of sensing protocol PDU and a second type of sensing protocol PDU;
wherein the first type of sensing protocol PDU is used to carry the sensing control information, and the second type of sensing protocol PDU is used to carry the sensing data.

In some embodiments, the first type of sensing protocol PDU and the second type of sensing protocol PDU are transmitted through a same transmission manner among the transmission manners; or, the first type of sensing protocol PDU and the second type of sensing protocol PDU are transmitted through different transmission manners among the transmission manners.

In some embodiments, the processor is further configured to:
add or modify the first radio bearer (RB) according to parameters associated with the first RB.

In some embodiments, the processor is further configured to:
in a case that the sensing protocol PDU is an SDAP service data unit (SDU), establish a packet data convergence protocol (PDCP) entity associated with the first RB, set PDCP parameters, associate the first RB with an SDAP entity, and set SDAP parameters according to the parameters associated with the first RB; or,
in a case that the sensing protocol PDU is a PDCP SDU, establish a PDCP entity associated with the first RB and set PDCP parameters according to the parameters associated with the first RB.

In some embodiments, the processor is further configured to:
configure PDCP parameters and/or configure SDAP parameters according to the parameters associated with the first RB, wherein the configuring comprises setting or reconfiguring.

To achieve the above objective, in a sixth aspect, embodiments of the present disclosure further provide an information transmission apparatus, comprising:
a first receiving unit, configured to receive a sensing protocol protocol data unit (PDU) transmitted by a first communication device, wherein the sensing protocol PDU comprises sensing protocol layer information;
the sensing protocol PDU being transmitted through one of the following transmission manners:
   a radio resource control (RRC) message;
   a service data adaptation protocol (SDAP) service data unit (SDU);
   a packet data convergence protocol (PDCP) service data unit (SDU).

To achieve the above objective, embodiments of the present disclosure further provide a processor-readable storage medium, wherein the processor-readable storage medium stores a computer program, and the computer program is configured to cause a processor to execute the steps of the information transmission method according to the first aspect, or execute the steps of the information transmission method according to the second aspect.

The technical solutions described above in the present disclosure have at least the following beneficial effects:
in the above technical solutions of the embodiments of the present disclosure, by generating a sensing protocol protocol data unit (PDU), wherein the sensing protocol PDU comprises sensing protocol layer information; and transmitting the sensing protocol PDU to a second communication device; wherein, the sensing protocol PDU is transmitted through one of the following transmission manners: an RRC message; a service data adaptation protocol (SDAP) service data unit (SDU); or, a packet data convergence protocol (PDCP) service data unit (SDU); a sensing protocol layer existing between the first communication device and the second communication device is used to support sensing functionality, thereby decoupling the sensing function from the radio resource control function, and improving protocol readability.

### BRIEF DESCRIPTION OF THE DRAWINGS

FIG. 1 shows a first schematic flow chart of an information transmission method according to an embodiment of the present disclosure;
FIG. 2 shows a first schematic diagram of a protocol stack for transmitting a sensing protocol PDU according to an embodiment of the present disclosure;
FIG. 3 shows a second schematic diagram of a protocol stack for transmitting a sensing protocol PDU according to an embodiment of the present disclosure;
FIG. 4 shows a third schematic diagram of a protocol stack for transmitting a sensing protocol PDU according to an embodiment of the present disclosure;
FIG. 5 shows a second schematic flow chart of an information transmission method according to an embodiment of the present disclosure;
FIG. 6 shows a block diagram of a first communication device according to an embodiment of the present disclosure;
FIG. 7 shows a first schematic module diagram of an information transmission apparatus according to an embodiment of the present disclosure;
FIG. 8 shows a block diagram of a second communication device according to an embodiment of the present disclosure;
FIG. 9 shows a second schematic module diagram of an information transmission apparatus according to an embodiment of the present disclosure.

### DETAILED DESCRIPTION

In the embodiments of the present disclosure, the term "and/or" describes an association relationship between associated objects, indicating that three kinds of relationships may exist. For example, A and/or B may indicate: the existence of A alone, the simultaneous existence of A and B, and the existence of B alone. The character "/" generally indicates that the associated objects before and after represent an "or" relationship.

In the embodiments of the present disclosure, the term "a plurality of" refers to two or more, and other quantifiers have similar meanings.

The technical solutions in the embodiments of the present disclosure will be clearly and completely described below with reference to the accompanying drawings. It is obvious that the described embodiments are merely a part of the embodiments of the present disclosure, rather than all of the embodiments. Based on the embodiments in the present disclosure, all other embodiments obtained by those skilled in the art without creative work shall fall within the scope of protection of the present disclosure.

To facilitate understanding of the solutions of the present disclosure, relevant contents involved in the present disclosure are first introduced.

The sensing function includes functions such as positioning, ranging, speed measurement, imaging, detection, recognition, and environmental reconstruction. Services based on the sensing function may be applied in fields such as intelligent transportation, unmanned aerial vehicle (UAV) supervision, smart homes, public safety, health monitoring, and environmental detection.

In the related art, in order to support communication and sensing integration functions, base stations and user equipment (UE) in a network need to perform transmission and/or reception of sensing signals. A base station or a UE may obtain a result of a sensing signal measurement quantity based on the reception of the sensing signal. The sensing signal measurement quantity may be, for example, the received power, time delay, or Doppler shift of the sensing signal.

In a process where a UE participates in sensing, a base station transmits sensing measurement configuration information to the UE. The information comprises a sensing signal measurement quantity and a sensing result reporting mode. The sensing result reporting mode may be, for example, periodic reporting, event-triggered reporting, or single reporting. After obtaining the result of the sensing signal measurement quantity, the UE transmits a sensing measurement report to the base station. The sensing measurement report comprises the result of the sensing signal measurement quantity. Transmission of the sensing measurement configuration and the sensing measurement report may be performed through radio resource control (RRC) signaling.

It should be noted that the sensing signal in the present disclosure refers to a wireless signal used for sensing. The sensing signal may be a wireless signal dedicated to sensing, or may be a wireless signal used for both sensing and communication.

The control information (for example, the above sensing measurement configuration information) and data (for example, the above sensing signal measurement quantity results) related to sensing between the base station and the UE are transmitted through RRC signaling. The sensing function and the radio resource control function are coupled together, which increases the complexity of the RRC protocol and leads to poor protocol readability.

To solve the above technical problems, embodiments of the present disclosure provide an information transmission method, an apparatus, a device, and a medium. The method and the apparatus are based on the same inventive concept. Since the principles for solving problems by the method and the apparatus are similar, implementations of the apparatus and the method may refer to each other, and repeated details are omitted.

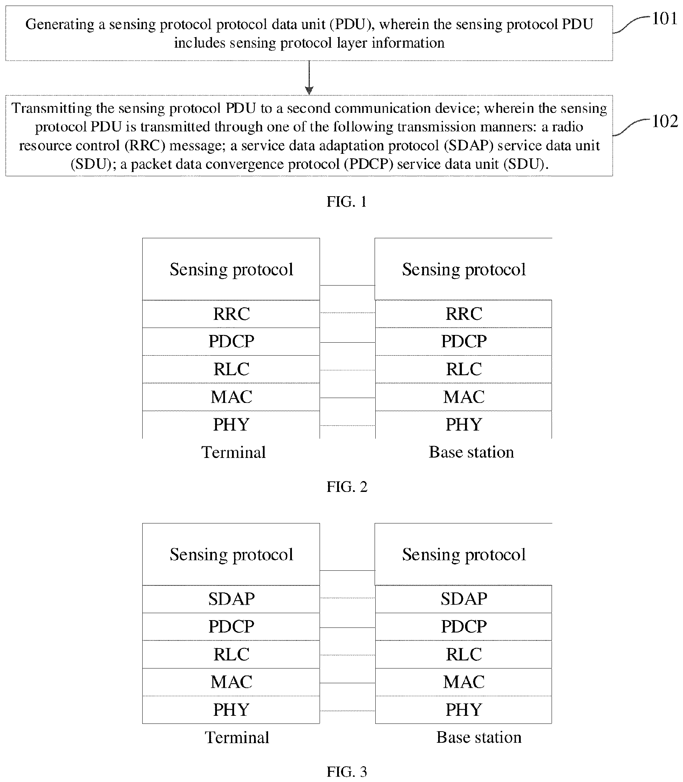

As shown in FIG. 1, a schematic flow chart of an information transmission method according to an embodiment of the present disclosure is provided. The method is applied to a first communication device, comprising:
Step 101: generating a sensing protocol protocol data unit (PDU), wherein the sensing protocol PDU comprises sensing protocol layer information;

Here, the first communication device acts as a transmitting end, and may be a terminal or a base station. Specifically, when the first communication device is a terminal, the second communication device is a base station; and when the first communication device is a base station, the second communication device is a terminal.

Specifically, a sensing protocol layer of the first communication device generates a sensing protocol protocol data unit (PDU).

It should be noted that an end-to-end sensing protocol layer is defined between a base station and a terminal. The sensing protocol is used to support sensing functions. The sensing functions include positioning, ranging, speed measurement, imaging, detection, recognition, and environmental reconstruction.

The sensing protocol layer information comprises control information of the sensing protocol layer (abbreviated as sensing control information) and/or data of the sensing protocol layer (abbreviated as sensing data). The control information of the sensing protocol layer may be, for example, sensing signal configuration or sensing measurement configuration. The data of the sensing protocol layer include received data of sensing signals and data determined based on the received data of the sensing signals. The data determined based on the received data of the sensing signals comprise measurement quantities of the sensing signals, such as received power, delay, and Doppler shift of the sensing signals. The data determined based on the received data of the sensing signals may further comprise sensing results determined based on the measurement quantities of the sensing signals, such as distance, velocity, direction, or position of a sensing target.

The sensing protocol layer information may be carried in the sensing protocol PDU. Carrying the sensing protocol layer information in the sensing protocol PDU may refer to that the sensing protocol PDU is the sensing protocol layer information itself, or that the sensing protocol PDU comprises the sensing protocol layer information and other information. The other information may be header information of the sensing protocol layer, such as information indicating whether the PDU is a data PDU or a control PDU. The sensing protocol layer information needs to be transmitted between two endpoints (a base station and a UE). Therefore, a sensing protocol PDU needs to be transmitted between the two endpoints.

Step 102: transmitting the sensing protocol PDU to a second communication device; wherein, the sensing protocol PDU is transmitted through one of the following transmission manners:
an RRC message;
a service data adaptation protocol (SDAP) service data unit (SDU);
a packet data convergence protocol (PDCP) service data unit (SDU).

Optionally, in some embodiments, Step 102 specifically comprises:
transmitting, through a first radio bearer (RB), the sensing protocol PDU to the second communication device, wherein the first RB is a dedicated RB for transmitting the sensing protocol PDU.

It should be noted that one or more dedicated RBs may exist between the first communication device and the second communication device for transmitting sensing protocol PDUs. The first communication device supports mapping different sensing protocol PDUs onto different radio bearers (RBs) for transmission. The mapping between the sensing protocol PDU and the RB may be fixed in the protocol, or may be determined by the base station. The terminal may determine the mapping between the sensing protocol PDU and the RB based on indication information transmitted from the base station to the terminal. The terminal may determine a mapping relationship between sensing protocol PDUs having different characteristics and RBs based on the indication information. The characteristics of the sensing protocol PDU may comprise a sensing protocol PDU type, sensing data carried by the sensing protocol PDU, or a quality of service (QoS) flow of the sensing protocol PDU. One way for the terminal to determine the mapping relationship between the characteristics of the sensing protocol PDU and the RB is that the base station indicates the mapping relationship between the characteristics of the sensing protocol PDU and the RB to the terminal through RRC signaling. Another way is that the terminal determines the RB corresponding to the characteristics of the sensing protocol PDU by reflecting the mapping of the characteristics of the sensing protocol PDU to the RB. Specifically, the terminal first determines the RB corresponding to the characteristics of a downlink sensing protocol PDU and uses the determined RB as a mapping rule between the characteristics of an uplink sensing protocol PDU and the RB.

In one embodiment, the mapping between the sensing protocol PDU and the RB specifically comprises mapping control information and data of the sensing protocol layer to different RBs respectively, and the first RB is an RB corresponding to a type of the sensing protocol PDU. In another embodiment, the mapping between the sensing protocol PDU and the RB specifically comprises mapping different data of the sensing protocol layer to different RBs, and the first RB is an RB corresponding to the data carried by the sensing protocol PDU. In yet another embodiment, the mapping between the sensing protocol PDU and the RB specifically comprises mapping sensing protocol PDUs of different QoS flows to different RBs, and the first RB is an RB corresponding to a QoS flow of the sensing protocol PDU.

It should be noted that there is a mapping relationship or correspondence between the QoS flow and the RB. The sensing protocol layer at a transmitting end maps sensing protocol PDUs belonging to a QoS flow to the RB corresponding to the QoS flow according to the mapping relationship between the QoS flow and the RB, and transmits them to the sensing protocol layer at a receiving end.

A default RB for transmitting sensing protocol PDUs may also be configured. If a QoS flow does not have a mapping relationship with an RB, the QoS flow may be mapped to the default RB. In a case that the terminal transmits sensing protocol PDUs, the base station needs to indicate the mapping relationship between the QoS flow and the RB to the terminal, so that the terminal can determine the RB corresponding to the QoS flow.

The mapping relationship between the QoS flow and the RB may be determined by the base station. One way for the terminal to determine the mapping relationship between the QoS flow and the RB is that the base station indicates the mapping relationship between the QoS flow and the RB to the terminal through RRC signaling.

Another way is that the terminal determines the RB corresponding to the QoS flow by reflecting the mapping of the QoS flow to the RB. Specifically, the terminal first determines the RB corresponding to the QoS flow of a downlink sensing protocol PDU, and uses it as a mapping rule between the QoS flow of an uplink sensing protocol PDU and the RB. For example, after determining the RB corresponding to the QoS flow of a downlink sensing protocol PDU, the terminal may determine the mapping relationship between the QoS flow and the RB, and apply the same mapping relationship to the transmission of an uplink sensing protocol PDU, thereby mapping the uplink sensing protocol PDU of the QoS flow to the RB.

Optionally, in some embodiments, in a case that the sensing protocol PDU is transmitted through an RRC message, Step 102 specifically comprises:
transmitting, to the second communication device, the RRC message, wherein the RRC message comprises the sensing protocol PDU.

That is, an RRC message in the RRC protocol is used for transmitting sensing protocol layer information. In other words, the sensing protocol PDU is carried in the RRC message. The sensing protocol layer information is transparent to the RRC layer. In this embodiment, a schematic diagram of a protocol stack for transmitting a sensing protocol PDU may refer to FIG. 2.

In some embodiments, the RRC message is a newly added RRC message. The newly added RRC message may be dedicated to downlink or uplink transmission of sensing protocol layer information.

When the first communication device is a base station and the second communication device is a terminal, the RRC message is a first RRC message. The first RRC message may be a newly added RRC message, which may be dedicated to downlink transmission of sensing protocol layer information, for example, a downlink sensing message.

An example of an ASN.1 definition of the first RRC message is as follows:
A downlink sensing message (DLSensingInformation) is the first RRC message, which comprises a field "dedicatedSensing-Message" . The field is used for transmitting sensing protocol layer information between the base station and the terminal. The RRC layer is transparent to such information.

```
DLSensingInformation ::= SEQUENCE {
 dedicatedSensing-Message DedicatedSensing-Message
 }
 DedicatedSensing-Message ::= OCTET STRING
```

When the first communication device is a terminal and the second communication device is a base station, the RRC message is a second RRC message. The second RRC message may be a newly added RRC message, which may be dedicated to uplink transmission of sensing protocol layer information, for example, an uplink sensing message.

An example of an ASN.1 definition of the second RRC message is as follows:
An uplink sensing message (ULSensingInformation) is the second RRC message, which comprises a field "dedicatedSensing-Message" . The field is used for transmitting sensing protocol layer information between the base station and the terminal. The RRC layer is transparent to such information.

```
ULSensingInformation ::= SEQUENCE {
 dedicatedSensing-Message DedicatedSensing-Message
 }
 DedicatedSensing-Message ::= OCTET STRING
```

In some embodiments, the RRC message is an uplink information transfer message or a downlink information transfer message.

When the first communication device is a base station and the second communication device is a terminal, the RRC message is the first RRC message. The first RRC message is a downlink information transfer (DLInformationTransfer) message, and a new field is added to the DLInformationTransfer message, wherein the field comprises the sensing protocol PDU.

The downlink information transfer message may be used not only for transmitting downlink sensing protocol layer information, but also for transmitting other information such as non-access stratum (NAS) information.

An example of an ASN.1 definition of the newly added field of the downlink information transfer message is as follows. The newly added field is "dedicatedSensing-Message" , which is used for transmitting sensing protocol layer information between the base station and the UE. The RRC layer is transparent to such information.

```
DLInformationTransfer-v1900-IEs ::= SEQUENCE {
 dedicatedSensing-Message DedicatedSensing-Message OPTIONAL, --
 Need N
 nonCriticalExtension SEQUENCE{ } OPTIONAL
 }
 DedicatedSensing-Message ::= OCTET STRING
```

When the first communication device is a terminal and the second communication device is a base station, the RRC message is the second RRC message. The second RRC message is an uplink information transfer (ULInformationTransfer) message, and a new field is added to the ULInformationTransfer message, wherein the field comprises the sensing protocol PDU.

The uplink information transfer message may be used not only for transmitting uplink sensing protocol layer information, but also for transmitting other information such as NAS information.

An example of an ASN.1 definition of the newly added field of the uplink information transfer message is as follows. The newly added field is "dedicatedSensing-Message" , which is used for transmitting sensing protocol layer information between the base station and the UE. The RRC layer is transparent to such information.

```
ULInformationTransfer-v1900-IEs ::= SEQUENCE {
 dedicatedSensing-Message DedicatedSensing-Message OPTIONAL, --
 Need N
 nonCriticalExtension SEQUENCE{ } OPTIONAL
 }
 DedicatedSensing-Message ::= OCTET STRING
```

In some embodiments, the first RRC message and the second RRC message are transmitted through a signaling radio bearer (SRB). The first RRC message and the second RRC message may use the same SRB or different SRBs.

Transmitting the sensing protocol PDU to the second communication device comprises:
(1) an RRC layer of the first communication device delivering the RRC message to a PDCP entity associated with a first SRB, wherein the RRC message is a PDCP SDU and the first SRB is used for transmitting the RRC message;
   prior to this step, the first communication device delivers the sensing protocol PDU to the RRC layer, and the RRC layer sets the RRC message comprising the sensing protocol PDU;
   then executing this step, that is, delivering the RRC message to the PDCP entity associated with the first SRB;
(2) processing, by the PDCP entity associated with the first SRB, the PDCP SDU to obtain a PDCP PDU;
   that is, a PDCP PDU is obtained after being processed by the PDCP entity;
(3) transmitting the PDCP PDU to the second communication device;
   specifically, the PDCP PDU is delivered to a peer PDCP entity on the side of the second communication device through lower layers (radio link control (RLC), media access control (MAC), and physical layer (PHY)).

In some embodiments, in a case that the sensing protocol PDU is transmitted through an SDAP SDU, Step 102 specifically comprises:
transmitting, to the second communication device, an SDAP PDU, wherein the SDAP PDU carries an SDAP SDU, and the sensing protocol PDU is the SDAP SDU.

That is, the sensing protocol PDU serves as (or is equivalent to) the SDAP SDU and is carried in the SDAP PDU. The content of the sensing protocol PDU is transparent to the SDAP layer. In this embodiment, a schematic diagram of a protocol stack for transmitting a sensing protocol PDU may refer to FIG. 3.

In this embodiment, the first communication device and the second communication device (that is, the base station and the terminal) respectively comprise independent SDAP entities for transmitting the sensing protocol PDU. Specifically, one or more dedicated RBs are provided between the first communication device and the second communication device for transmitting the sensing protocol PDU. An SDAP entity at a transmitting side maps an SDAP PDU carrying the sensing protocol PDU onto an RB and transmits it to a receiving side.

In some embodiments, in a case that the sensing protocol PDU is transmitted through a PDCP SDU, Step 102 specifically comprises:
transmitting, to the second communication device, a PDCP PDU, wherein the PDCP PDU carries a PDCP SDU, and the sensing protocol PDU is the PDCP SDU.

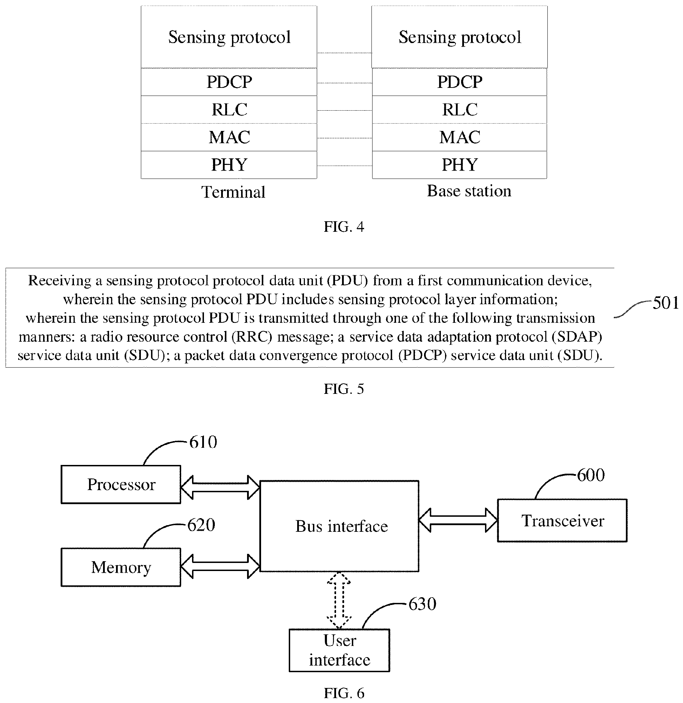

That is, the sensing protocol PDU is the PDCP SDU and is carried in the PDCP PDU. The content of the sensing protocol PDU is transparent to the PDCP layer. In this embodiment, a schematic diagram of a protocol stack for transmitting a sensing protocol PDU may refer to FIG. 4.

In other words, the PDCP layer adds a function for transmitting the sensing protocol PDU. Specifically, one or more dedicated RBs are provided between the first communication device and the second communication device for transmitting the sensing protocol PDU.

It should be noted that each RB among one or more RBs used for transmitting the sensing protocol PDU is associated with one PDCP entity. Each PDCP entity is used for transmitting and/or receiving data of one RB.

In some embodiments, the sensing protocol layer information comprises sensing control information and sensing data, and the sensing protocol PDU comprises a first-type sensing protocol PDU and a second-type sensing protocol PDU;
wherein the first-type sensing protocol PDU is used for carrying the sensing control information, and the second-type sensing protocol PDU is used for carrying the sensing data.

Specifically, the first-type sensing protocol PDU and the second-type sensing protocol PDU are transmitted through the same transmission manner among the above transmission manners, or the first-type sensing protocol PDU and the second-type sensing protocol PDU are transmitted through different transmission manners among the above transmission manners.

Here, transmitting the first-type sensing protocol PDU and the second-type sensing protocol PDU through the same transmission manner means that the sensing protocol PDU used for carrying sensing control information and the sensing protocol PDU used for carrying sensing data are both transmitted through the RRC message (first manner), or both through the SDAP SDU (second manner), or both through the PDCP SDU (third manner).

Here, transmitting the first-type sensing protocol PDU and the second-type sensing protocol PDU through different transmission manners means that the two types of sensing protocol PDUs use different transmission manners among the above-mentioned manners.

In some embodiments, the sensing protocol PDU used for carrying sensing control information is transmitted through the first manner, and the sensing protocol PDU used for carrying sensing data is transmitted through the second manner.

In some embodiments, the sensing protocol PDU used for carrying sensing control information is transmitted through the third manner, and the sensing protocol PDU used for carrying sensing data is transmitted through the second manner.

In some embodiments, the sensing protocol PDU used for carrying sensing control information is transmitted through the first manner, and the sensing protocol PDU used for carrying sensing data is transmitted through the third manner.

In some embodiments, in a case that the sensing protocol PDU is transmitted through an RRC message, transmitting the sensing protocol PDU to the second communication device through a first radio bearer (RB) comprises:
(1) an RRC layer of the first communication device delivering the RRC message to a PDCP entity associated with the first RB, wherein the RRC message is a PDCP SDU;
   prior to this step, the first communication device delivers the sensing protocol PDU to the RRC layer, and the RRC layer sets the RRC message comprising the sensing protocol PDU;
   then executing this step, that is, delivering the RRC message to the PDCP entity associated with the first RB;
(2) processing, by the PDCP entity associated with the first RB, the PDCP SDU to obtain a PDCP PDU;
   That is, a PDCP PDU is obtained after being processed by the PDCP entity.
(3) transmitting the PDCP PDU to the second communication device.

Specifically, the PDCP PDU is delivered to a peer PDCP entity on the side of the second communication device through lower layers (RLC/MAC/PHY).

In some embodiments, in a case that the sensing protocol PDU is transmitted through an SDAP SDU, transmitting the sensing protocol PDU to the second communication device through a first RB comprises:
I) an SDAP entity of the first communication device delivering the SDAP PDU to a PDCP entity associated with the first RB, wherein the SDAP PDU is a PDCP SDU;
   prior to this step, the method of the present disclosure further comprises:
   ① delivering the sensing protocol PDU to the SDAP entity, wherein the sensing protocol PDU is an SDAP SDU;
      it should be noted that the sensing protocol layer generates the sensing protocol PDU and then delivers the sensing protocol PDU to the SDAP entity. The SDAP entity receives an SDAP SDU (that is, the sensing protocol PDU) from the sensing protocol layer.
   ② processing, by the SDAP entity, the SDAP SDU to obtain an SDAP PDU.

Specifically, processing the SDAP SDU may mean that the SDAP PDU is the SDAP SDU itself (that is, no SDAP header is added); or processing the SDAP SDU may mean that an SDAP header is added to the SDAP SDU to obtain the SDAP PDU.

In some embodiments, the SDAP SDU is the SDAP PDU; or,
the SDAP PDU comprises the SDAP SDU and an SDAP header; wherein, the SDAP header comprises at least one of the following:
an indication of QoS flow to RB mapping relationship update;
a QoS flow identifier;
a sensing protocol PDU type identifier.

The SDAP entity of the first communication device needs to determine the first RB corresponding to the SDAP PDU. Specifically, the SDAP entity determines, according to a type of the sensing protocol PDU carried by the SDAP PDU, that the RB corresponding to the type of the sensing protocol PDU is the first RB; or, the SDAP entity of the first communication device determines, according to a QoS flow of the sensing protocol PDU carried by the SDAP PDU, that the RB corresponding to the QoS flow is the first RB.

II) processing, by the PDCP entity associated with the first RB, the PDCP SDU to obtain a PDCP PDU;
III) transmitting the PDCP PDU to the second communication device.

Specifically, the PDCP PDU is delivered to a peer PDCP entity on the side of the second communication device through lower layers (RLC/MAC/PHY).

In some embodiments, in a case that the sensing protocol PDU is transmitted through a PDCP SDU, transmitting the sensing protocol PDU to the second communication device through a first RB comprises:
1) a sensing protocol layer of the first communication device delivering the sensing protocol PDU to a PDCP entity associated with the first RB, wherein the sensing protocol PDU is a PDCP SDU;
   the sensing protocol layer of the first communication device needs to determine the first RB corresponding to the sensing protocol PDU. Specifically, the sensing protocol layer determines, according to a type of the sensing protocol PDU, that the RB corresponding to the type of the sensing protocol PDU is the first RB; or, the sensing protocol layer of the first communication device determines, according to a QoS flow of the sensing protocol PDU, that the RB corresponding to the QoS flow is the first RB; or, the sensing protocol layer of the first communication device determines, according to sensing data carried by the sensing protocol PDU, that the RB corresponding to the sensing data is the first RB.
2) processing, by the PDCP entity associated with the first RB, the PDCP SDU to obtain a PDCP PDU;
   specifically, processing the PDCP SDU may mean that the PDCP PDU is the PDCP SDU itself (that is, no PDCP header is added); or processing the PDCP SDU may mean that a PDCP header is added to the PDCP SDU to obtain the PDCP PDU.
3) transmitting the PDCP PDU to the second communication device.

Specifically, the PDCP PDU is delivered to a peer PDCP entity on the side of the second communication device through lower layers (RLC/MAC/PHY).

It should be noted that, in the above embodiments, the PDCP SDU may be the PDCP PDU; or,
the PDCP PDU comprises the PDCP SDU and a PDCP header; wherein, the PDCP header comprises a PDCP sequence number.

In some embodiments, prior to transmitting the sensing protocol PDU to the second communication device through the first RB, the method of the present disclosure further comprises:
A1: increasing or modifying the first RB according to parameters associated with the first RB.

It should be noted that, in a case that transmission of information of the sensing protocol is required between the first communication device and the second communication device, an RB for transmitting the sensing protocol PDU needs to be added; or, in a case that a currently used RB for transmitting the sensing protocol PDU is not suitable for transmitting a sensing protocol PDU having a certain QoS requirement, an RB capable of satisfying the QoS requirement for transmitting the sensing protocol PDU needs to be added.

In a case that the RB currently used for transmitting the sensing protocol PDU is not suitable for transmitting a sensing protocol PDU having a certain QoS requirement, parameters associated with the RB may be modified to meet the QoS requirement. In a case that a data type of the sensing protocol to be carried by the RB currently used for transmitting the sensing protocol PDU changes, the parameters associated with the RB may also be modified to enable transmission of the corresponding data type. In a case that a QoS flow to be carried by the RB currently used for transmitting the sensing protocol PDU changes, the parameters associated with the RB may also be modified to enable transmission of the corresponding QoS flow.

In some embodiments, the method of the present disclosure further comprises:
determining parameters associated with the first RB;
transmitting first indication information to the second communication device, wherein the first indication information is used for indicating parameters associated with the first RB, the first communication device is a base station, and the second communication device is a terminal.

Here, when the first communication device is a base station and the second communication device is a terminal, the base station determines parameters associated with the first RB, and then executes subsequent steps to increase or modify the first RB according to the parameters associated with the first RB.

The base station also transmits the first indication information to the terminal, wherein the first indication information is used for indicating parameters associated with the first RB, so that the terminal increases or modifies the first RB according to the parameters associated with the first RB.

An example of the first indication information is as follows. The first indication information is SenRB-ToAddMod, which is used for indicating parameters associated with a dedicated RB for transmitting the sensing protocol PDU.

```
RadioBearerConfig ::= SEQUENCE {
 srb-ToAddModList SRB-ToAddModList OPTIONAL, -- Cond HO-
 Conn
 srb3-ToRelease ENUMERATED{true} OPTIONAL, -- Need N
 drb-ToAddModList DRB-ToAddModList OPTIONAL, -- Cond HO-
 toNR
 drb-ToReleaseList DRB-ToReleaseList OPTIONAL, -- Need N
 securityConfig SecurityConfig OPTIONAL, -- Need M
 ...,
 [[
 mrb-ToAddModList-r17 MRB-ToAddModList-r17 OPTIONAL, --
 Need N
 mrb-ToReleaseList-r17 MRB-ToReleaseList-r17 OPTIONAL, -- Need N
 srb4-ToAddMod-r17 SRB-ToAddMod OPTIONAL, -- Need N
 srb4-ToRelease-r17 ENUMERATED { true } OPTIONAL, -- Need N
 senrb-ToAddModList SenRB-ToAddModList OPTIONAL, -- Need N
 ]]
 }
 SenRB-ToAddModList ::= SEQUENCE (SIZE (1..maxSenRB)) OF
 SenRB-ToAddMod
 SenRB-ToAddMod ::= SEQUENCE {
 Senrb-Identity SenRB-Identity,
 reestablishPDCP ENUMERATED { true } OPTIONAL, -- Need N
 recoverPDCP ENUMERATED { true} OPTIONAL, -- Need N
 pdcp-Config PDCP-Config OPTIONAL, -- Cond PDCP
 sdap-Config SDAP-Config OPTIONAL,
 ...
 }
```

In some embodiments, the method of the present disclosure further comprises:
receiving first indication information transmitted by the second communication device, wherein the first indication information is used for indicating parameters associated with the first RB, the first communication device is a terminal, and the second communication device is a base station.

When the first communication device is a terminal and the second communication device is a base station, the terminal receives the first indication information transmitted by the base station, wherein the first indication information is used for indicating parameters associated with the first RB. In this way, the first communication device executes subsequent steps to increase or modify the first RB according to the parameters associated with the first RB.

In some embodiments, parameters associated with the first RB comprise at least one of the following:
parameters of a PDCP entity associated with the first RB;
parameters of an SDAP entity associated with the first RB;
an identifier of the first RB;
the first RB is a default RB.

Wherein, parameters of the SDAP entity comprise at least one of the following:
a mapping relationship between a QoS flow and an RB;
a mapping relationship between a sensing protocol PDU type and an RB;
presence of an SDAP header;
absence of an SDAP header.

In some embodiments, the above Step A1, increasing the first RB according to parameters associated with the first RB, may comprise:
in a case that the sensing protocol PDU is an SDAP SDU, establishing, according to parameters associated with the first RB, a PDCP entity associated with the first RB, setting PDCP parameters (applying PDCP configuration), associating the first RB with an SDAP entity, and setting SDAP parameters (applying SDAP configuration); if an associated SDAP entity does not yet exist, establishing the SDAP entity as well.

Alternatively, in a case that the sensing protocol PDU is a PDCP SDU, establishing, according to parameters associated with the first RB, a PDCP entity associated with the first RB and setting PDCP parameters.

In some embodiments, the above Step A1, modifying the first RB according to parameters associated with the first RB, may comprise:
configuring PDCP parameters and/or configuring SDAP parameters according to parameters associated with the first RB, wherein the configuration comprises setting or reconfiguring.

In some embodiments, the method of the present disclosure further comprises:
in a case that transmission of the sensing protocol PDU is not required, releasing the first RB; transmitting second indication information to the second communication device, wherein the second indication information is used for indicating release of the first RB, the first communication device is a base station, and the second communication device is a terminal;
that is, in a case that transmission of a sensing protocol PDU corresponding to the RB currently used for transmitting the sensing protocol PDU is not required, the RB may be released. Alternatively, in a case that transmission of any sensing protocol PDU is not required, the RB used for transmitting the sensing protocol PDU may be released.

Here, when the first communication device is a base station and the second communication device is a terminal, if transmission of the sensing protocol PDU is not required, the base station releases the first RB.

The base station also transmits the second indication information to the terminal, wherein the second indication information is used for indicating release of the first RB, so that the terminal releases the first RB according to the second indication information.

Alternatively, receiving, from the second communication device, second indication information, wherein the second indication information is used for indicating release of the first RB; releasing the first RB according to the second indication information; wherein the first communication device is a terminal, and the second communication device is a base station.

When the first communication device is a terminal and the second communication device is a base station, the terminal receives the second indication information transmitted by the base station, and then releases the first RB based on the second indication information.

Specifically, in the above embodiments, releasing the first RB comprises:
in a case that the sensing protocol PDU is an SDAP SDU, releasing the first RB and an association between the first RB and the SDAP entity;
in a case that the sensing protocol PDU is a PDCP SDU, releasing the first RB.

The information transmission method according to the embodiment of the present disclosure comprises: generating a sensing protocol protocol data unit (PDU), wherein the sensing protocol PDU comprises sensing protocol layer information; transmitting the sensing protocol PDU to a second communication device; wherein the sensing protocol PDU is transmitted through one of the following transmission manners: an RRC message, a service data adaptation protocol (SDAP) service data unit (SDU), or a packet data convergence protocol (PDCP) service data unit (SDU). In this way, a sensing protocol layer existing between the first communication device and the second communication device supports the sensing function, thereby decoupling the sensing function from the radio resource control function and improving protocol readability.

As shown in FIG. 5, a schematic flow chart of an information transmission method according to an embodiment of the present disclosure is provided, which is applied to a second communication device. The method may comprise:
Step 501: receiving a sensing protocol protocol data unit (PDU) transmitted by a first communication device, wherein the sensing protocol PDU comprises sensing protocol layer information, and the sensing protocol PDU is transmitted through one of the following transmission manners:
an RRC message;
a service data adaptation protocol (SDAP) service data unit (SDU);
a packet data convergence protocol (PDCP) service data unit (SDU).

The method on the side of the second communication device corresponds to the method shown in FIG. 1.

Here, the first communication device serves as a transmitting end and may be a terminal or a base station. Specifically, when the first communication device is a terminal, the second communication device is a base station; when the first communication device is a base station, the second communication device is a terminal.

In some embodiments, Step 501 specifically comprises:
receiving, through a first radio bearer (RB), the sensing protocol PDU transmitted by the first communication device, wherein the first RB is a dedicated RB for transmitting the sensing protocol PDU.

Specifically, one or more dedicated RBs may be provided between the first communication device and the second communication device for transmitting the sensing protocol PDU.

It should be noted that each RB among one or more RBs for transmitting the sensing protocol PDU is associated with a PDCP entity, and each PDCP entity is used for transmitting and/or receiving data of one RB.

In some embodiments, in a case that the sensing protocol PDU is transmitted through an RRC message, Step 501 specifically comprises:
receiving, from the first communication device, a radio resource control (RRC) message, wherein the RRC message comprises the sensing protocol PDU.

It should be noted that the content related to the RRC message in Step 102 above is also applicable to this embodiment, and will not be repeated here.

In some embodiments, the RRC message is a newly added RRC message. The newly added RRC message may be dedicated to downlink or uplink transmission of sensing protocol layer information.

In some embodiments, the RRC message is an uplink information transfer message or a downlink information transfer message.

In some embodiments, the RRC message is transmitted through an SRB, and receiving the RRC message transmitted by the first communication device comprises:
(1) receiving a PDCP PDU transmitted by the first communication device;
   a PDCP entity of the second communication device associated with a first SRB receives, through lower layers (RLC/MAC/PHY), the PDCP PDU from a peer PDCP entity on the side of the first communication device, wherein the first SRB is used for transmitting the RRC message;
(2) processing, by the PDCP entity associated with the first SRB, the PDCP PDU to obtain a PDCP SDU;
(3) delivering the PDCP SDU to the RRC layer, wherein the PDCP SDU is an RRC message, and processing, by the RRC layer, the RRC message to obtain the sensing protocol PDU.

The RRC layer delivers the sensing protocol PDU to the sensing protocol layer.

In some embodiments, in a case that the sensing protocol PDU is transmitted through an SDAP SDU, Step 501 specifically comprises:
receiving an SDAP PDU transmitted by the first communication device, wherein the SDAP PDU carries an SDAP service data unit (SDU), and the sensing protocol PDU is the SDAP SDU.

It should be noted that the content related to the SDAP SDU and the SDAP PDU in Step 102 above is also applicable to this embodiment, and will not be repeated here.

In some embodiments, in a case that the sensing protocol PDU is transmitted through a PDCP SDU, Step 501 specifically comprises:
receiving a PDCP PDU transmitted by the first communication device, wherein the PDCP PDU carries a PDCP SDU, and the sensing protocol PDU is the PDCP SDU.

It should be noted that the content related to the PDCP SDU and the PDCP PDU in Step 102 above is also applicable to this embodiment, and will not be repeated here. In some embodiments, the sensing protocol layer information comprises sensing control information and sensing data, and the sensing protocol PDU comprises a first-type sensing protocol PDU and a second-type sensing protocol PDU;
wherein the first-type sensing protocol PDU is used for carrying the sensing control information, and the second-type sensing protocol PDU is used for carrying the sensing data.

Specifically, the first-type sensing protocol PDU and the second-type sensing protocol PDU are transmitted through the same transmission manner among the above transmission manners, or the first-type sensing protocol PDU and the second-type sensing protocol PDU are transmitted through different transmission manners among the above transmission manners.

In some embodiments, in a case that the sensing protocol PDU is transmitted through an RRC message, receiving the sensing protocol PDU transmitted by the first communication device through a first radio bearer (RB) comprises:
(1) receiving a PDCP PDU transmitted by the first communication device;
   specifically, a PDCP entity of the second communication device associated with the first RB receives, through lower layers (RLC/MAC/PHY), the PDCP PDU from a peer PDCP entity on the side of the first communication device;
(2) processing, by the PDCP entity associated with the first RB, the PDCP PDU to obtain a PDCP SDU;
(3) delivering the PDCP SDU to the RRC layer, wherein the PDCP SDU is an RRC message, and processing, by the RRC layer, the RRC message to obtain the sensing protocol PDU.

The RRC layer delivers the sensing protocol PDU to the sensing protocol layer.

In some embodiments, in a case that the sensing protocol PDU is transmitted through an SDAP SDU, receiving the sensing protocol PDU transmitted by the first communication device through a first radio bearer (RB) comprises:
I) receiving a PDCP PDU transmitted by the first communication device;
   specifically, a PDCP entity of the second communication device associated with the first RB receives, through lower layers (RLC/MAC/PHY), the PDCP PDU from a peer PDCP entity on the side of the first communication device.
II) processing, by the PDCP entity associated with the first RB, the PDCP PDU to obtain a PDCP SDU;
   here, the PDCP entity restores a corresponding PDCP SDU based on the PDCP PDU and delivers it to the SDAP entity.
III) delivering the PDCP SDU to the SDAP entity, wherein the PDCP SDU is an SDAP PDU;
IV) processing, by the SDAP entity, the SDAP PDU to obtain an SDAP SDU.

Since the SDAP entity is used for transmitting the sensing protocol PDU, the SDAP entity delivers the SDAP SDU to the sensing protocol layer, wherein the SDAP SDU is the sensing protocol PDU.

Here, the SDAP entity restores a corresponding SDAP SDU based on the SDAP PDU.

In some embodiments, the SDAP SDU is the SDAP PDU; or,
the SDAP PDU comprises the SDAP SDU and an SDAP header, wherein the SDAP header comprises at least one of the following:
an indication for updating the mapping relationship between a QoS flow and an RB;
a QoS flow identifier;
a sensing protocol PDU type identifier.

In some embodiments, in a case that the sensing protocol PDU is transmitted through a PDCP SDU, receiving the sensing protocol PDU transmitted by the first communication device through a first radio bearer (RB) comprises:
1) receiving a PDCP PDU transmitted by the first communication device;
   specifically, a PDCP entity of the second communication device associated with the first RB receives, through lower layers (RLC/MAC/PHY), the PDCP PDU from a peer PDCP entity on the side of the first communication device.
2) processing, by the PDCP entity associated with the first RB, the PDCP PDU to obtain a PDCP SDU.

Since the PDCP entity is used for transmitting the sensing protocol PDU, the PDCP entity delivers the PDCP SDU to the sensing protocol layer, wherein the PDCP SDU is the sensing protocol PDU.

Here, the PDCP entity restores a corresponding PDCP SDU based on the PDCP PDU and delivers it to the sensing protocol layer. Subsequently, the sensing protocol layer receives the sensing protocol PDU from the PDCP entity and parses the content of the sensing protocol PDU.

In the above embodiments, the PDCP SDU is the PDCP PDU; or,
the PDCP PDU comprises the PDCP SDU and a PDCP header, wherein the PDCP header comprises a PDCP sequence number.

In some embodiments, before receiving, through a first radio bearer (RB), the sensing protocol protocol data unit (PDU) transmitted by the first communication device, the method of the present disclosure further comprises:
B1: increasing or modifying the first RB according to parameters associated with the first RB.

It should be noted that, in a case that transmission of information of the sensing protocol is required between the first communication device and the second communication device, an RB for transmitting the sensing protocol PDU needs to be added; or, in a case that a currently used RB for transmitting the sensing protocol PDU is not suitable for transmitting a sensing protocol PDU having a certain QoS requirement, an RB capable of satisfying the QoS requirement for transmitting the sensing protocol PDU needs to be added.

In a case that a currently used RB for transmitting the sensing protocol PDU is not suitable for transmitting a sensing protocol PDU having a certain QoS requirement, parameters associated with the RB may be modified to satisfy the QoS requirement. In a case that a data type of the sensing protocol to be carried by the currently used RB for transmitting the sensing protocol PDU changes, the parameters associated with the RB may also be modified so as to enable transmission of the corresponding data type. In a case that the QoS flow to be carried by the currently used RB for transmitting the sensing protocol PDU changes, the parameters associated with the RB may also be modified so as to enable transmission of the corresponding QoS flow.

In some embodiments, the method of the present disclosure further comprises:
determining parameters associated with the first RB;
transmitting, to the first communication device, first indication information, wherein the first indication information is used for indicating parameters associated with the first RB, and the first communication device is a terminal while the second communication device is a base station.

When the first communication device is a terminal and the second communication device is a base station, the base station determines parameters associated with the first RB, and then executes subsequent steps of increasing or modifying the first RB according to the parameters associated with the first RB.

The base station also transmits the first indication information to the terminal, wherein the first indication information is used for indicating parameters associated with the first RB, so that the terminal increases or modifies the first RB according to the parameters associated with the first RB.

In some embodiments, the method of the present disclosure further comprises:
receiving, from the first communication device, first indication information, wherein the first indication information is used for indicating parameters associated with the first RB, and the first communication device is a base station while the second communication device is a terminal.

When the first communication device is a base station and the second communication device is a terminal, the terminal receives the first indication information transmitted by the base station, wherein the first indication information is used for indicating parameters associated with the first RB, so that the first communication device executes subsequent steps of increasing or modifying the first RB according to the parameters associated with the first RB.

In some embodiments, the parameters associated with the first RB comprise at least one of the following:
parameters of a PDCP entity associated with the first RB;
parameters of an SDAP entity associated with the first RB;
an identifier of the first RB;
the first RB is a default RB.

Wherein, parameters of the SDAP entity comprise at least one of the following:
a mapping relationship between a QoS flow and an RB;
a mapping relationship between a sensing protocol PDU type and an RB;
presence of an SDAP header;
absence of an SDAP header.

In some embodiments, the above Step B1, increasing the first RB according to parameters associated with the first RB, may comprise:
in a case that the sensing protocol PDU is an SDAP SDU, establishing, according to parameters associated with the first RB, a PDCP entity associated with the first RB, setting PDCP parameters (applying PDCP configuration), associating the first RB with an SDAP entity, and setting SDAP parameters (applying SDAP configuration); if an associated SDAP entity does not yet exist, establishing the SDAP entity as well.

Alternatively, in a case that the sensing protocol PDU is a PDCP SDU, establishing, according to parameters associated with the first RB, a PDCP entity associated with the first RB and setting PDCP parameters.

The following example illustrates an implementation of adding an RB for transmitting a sensing protocol PDU.

### Example 1

This example corresponds to the case where the sensing protocol PDU is an SDAP SDU.
1. The base station transmits indication information to the terminal, wherein the indication information is used for indicating parameters related to a dedicated RB for transmitting the sensing protocol PDU.

The RB-related parameters comprise one or more of the following: parameters of the PDCP entity of the RB, parameters of the SDAP entity associated with the RB, the RB identifier, and whether it is a default RB.

The parameters of the SDAP entity comprise at least one of the following: a mapping relationship between a QoS flow and an RB, presence of an SDAP header, absence of an SDAP header, and whether it is a default RB. It should be understood that the SDAP entity is dedicated to transmitting the sensing protocol PDU.

1a. The base station determines parameters related to the dedicated RB for transmitting the sensing protocol PDU.

1b. The base station, based on the RB-related parameters, establishes a PDCP entity for the RB, sets PDCP parameters (applies PDCP configuration), associates the RB with an SDAP entity, and sets SDAP parameters (applies SDAP configuration). If the SDAP entity associated with the RB does not yet exist, the SDAP entity is also established.
2. The terminal, based on the indication information, establishes a PDCP entity for the RB, sets PDCP parameters, associates the RB with an SDAP entity, and sets SDAP parameters. If the SDAP entity associated with the RB does not yet exist, the SDAP entity is also established.
3. The base station transmits the sensing protocol PDU to the terminal through the RB.
4. The terminal transmits the sensing protocol PDU to the base station through the RB.

Step 1a is performed before Step 1, Step 1a is performed before Step 1b, and the order between Step 1b and Step 1 is not limited. Steps 3 and 4 are optional.

### Example 2

This example corresponds to the case where the sensing protocol PDU is a PDCP SDU.
1. The base station transmits indication information to the terminal, wherein the indication information is used for indicating parameters related to a dedicated RB for transmitting the sensing protocol PDU.

The RB-related parameters comprise one or more of the following: parameters of the PDCP entity of the RB, parameters of the SDAP entity associated with the RB, the RB identifier, whether it is a default RB, and a mapping relationship between the sensing protocol PDU and the RB.

The mapping relationship between the sensing protocol PDU and the RB may specifically be a mapping relationship between control information and data of the sensing protocol layer and RBs, or a mapping relationship between different data of the sensing protocol layer and RBs, or a mapping relationship between different QoS flows of the sensing protocol PDU and RBs.
1a. The base station determines parameters related to the dedicated RB for transmitting the sensing protocol PDU.
1b. The base station, based on the RB-related parameters, establishes a PDCP entity for the RB and sets PDCP parameters (applies PDCP configuration).
2. The terminal, based on the indication information, establishes a PDCP entity for the RB and sets PDCP parameters.
3. The base station transmits the sensing protocol PDU to the terminal through the RB.
4. The terminal transmits the sensing protocol PDU to the base station through the RB.

Step 1a is performed before Step 1, Step 1a is performed before Step 1b, and the order between Step 1b and Step 1 is not limited. Steps 3 and 4 are optional.

In some embodiments, the above Step B 1, modifying the first RB according to parameters associated with the first RB, may comprise:
configuring PDCP parameters and/or configuring SDAP parameters according to parameters associated with the first RB, wherein the configuration includes setting or reconfiguring.

The following example illustrates an implementation of modifying an RB for transmitting the sensing protocol PDU.

### Example 3

This example corresponds to the case where the sensing protocol PDU is an SDAP SDU.
1. The base station transmits indication information to the UE, wherein the indication information is used for indicating parameters related to a dedicated RB for transmitting the sensing protocol PDU.

The RB-related parameters comprise one or more of the following: parameters of the PDCP entity of the RB, parameters of the SDAP entity associated with the RB, and whether it is a default RB. The parameters of the SDAP entity comprise at least one of the following: a mapping relationship between a QoS flow and an RB, presence of an SDAP header, absence of an SDAP header, and whether it is a default RB.
1a. The base station determines parameters related to the dedicated RB for transmitting the sensing protocol PDU.
1b. The base station sets (reconfigures) PDCP parameters and/or sets (reconfigures) SDAP parameters.
2. The terminal, based on the indication information, sets (reconfigures) PDCP parameters and/or sets (reconfigures) SDAP parameters.
3. The base station transmits the sensing protocol PDU to the terminal through the RB.
4. The terminal transmits the sensing protocol PDU to the base station through the RB.

Step 1a is performed before Step 1, Step 1a is performed before Step 1b, and the order between Step 1b and Step 1 is not limited. Steps 3 and 4 are optional.

### Example 4

This example corresponds to the case where the sensing protocol PDU is a PDCP SDU.
1. The base station transmits indication information to the terminal, wherein the indication information is used for indicating parameters related to a dedicated RB for transmitting the sensing protocol PDU.

The RB-related parameters comprise one or more of the following: parameters of the PDCP entity of the RB, whether it is a default RB, and a mapping relationship between the sensing protocol PDU and the RB.
1a. The base station determines parameters related to the dedicated RB for transmitting the sensing protocol PDU.
1b. The base station sets (reconfigures) PDCP parameters.
2. The terminal, based on the indication information, sets (reconfigures) PDCP parameters.
3. The base station transmits the sensing protocol PDU to the terminal through the RB.
4. The terminal transmits the sensing protocol PDU to the base station through the RB.

Step 1a is performed before Step 1, Step 1a is performed before Step 1b, and the order between Step 1b and Step 1 is not limited. Steps 3 and 4 are optional.

In some embodiments, the method of the present disclosure further comprises:
in a case where transmission of the sensing protocol PDU is not required, the first RB is released; and second indication information is transmitted to the first communication device, wherein the second indication information is used for indicating release of the first RB, the first communication device being a terminal, and the second communication device being a base station.

That is, in a case where transmission of the sensing protocol PDU corresponding to the RB currently used for transmitting the sensing protocol PDU is not required, the RB may be released. Alternatively, in a case where transmission of the sensing protocol PDU is not required, the RB used for transmitting the sensing protocol PDU may be released.

Here, when the first communication device is a terminal and the second communication device is a base station, if transmission of the sensing protocol PDU is not required, the base station releases the first RB.

The base station further transmits the second indication information to the terminal, wherein the second indication information is used for indicating release of the first RB, so that the terminal releases the first RB according to the second indication information.

Alternatively, second indication information transmitted from the first communication device is received, wherein the second indication information is used for indicating release of the first RB; and the first RB is released according to the second indication information, wherein the first communication device is a base station, and the second communication device is a terminal.

When the first communication device is a base station and the second communication device is a terminal, the terminal receives the second indication information transmitted by the base station, and then releases the first RB based on the second indication information.

Specifically, in the above embodiments, the release of the first RB comprises:
in a case where the sensing protocol PDU is an SDAP SDU, releasing the first RB and the association between the first RB and the SDAP entity;
in a case where the sensing protocol PDU is a PDCP SDU, releasing the first RB.

The following examples illustrate implementations of releasing RBs used for transmitting sensing protocol PDUs.

### Example 5

This example corresponds to the case where the sensing protocol PDU is an SDAP SDU.
1. The base station transmits indication information to the terminal, wherein the indication information is used for indicating release of the dedicated RB for transmitting the sensing protocol PDU.
2. The terminal, based on the indication information, releases the RB and the association between the RB and the SDAP entity. If the SDAP entity has no associated RB, the SDAP entity is released.
2a. The base station releases the RB and the association between the RB and the SDAP entity. If the SDAP entity has no associated RB, the SDAP entity is released.

The order between Step 2a and Step 1 is not limited, and the order between Step 2a and Step 2 is not limited.

### Example 6

This example corresponds to the case where the sensing protocol PDU is a PDCP SDU.
1. The base station transmits indication information to the terminal, wherein the indication information is used for indicating release of the dedicated RB for transmitting the sensing protocol PDU.
2. The UE releases the RB according to the indication information.
2a. The base station releases the RB.

The order between Step 2a and Step 1 is not limited, and the order between Step 2a and Step 2 is not limited.

It should be noted that, whether the sensing protocol PDU is transmitted through the SDAP SDU transmission manner or through the PDCP SDU transmission manner, the sensing protocol PDU may be transmitted via different RBs, thereby providing different transmission qualities.

The information transmission method according to the embodiments of the present disclosure includes receiving a sensing protocol protocol data unit (PDU) transmitted by a first communication device, wherein the sensing protocol PDU comprises sensing protocol layer information, and the sensing protocol PDU is transmitted through one of the following transmission manners: an RRC message; a Service Data Adaptation Protocol (SDAP) Service Data Unit (SDU); or a Packet Data Convergence Protocol (PDCP) Service Data Unit (SDU). In this manner, a sensing protocol layer existing between the first communication device and the second communication device supports sensing functions, decouples sensing functions from radio resource control functions, and improves protocol readability.

As shown in FIG. 6, the embodiment of the present disclosure further provides a communication device, wherein the communication device is a first communication device and comprises: a memory 620, a transceiver 600, and a processor 610. The memory 620 is used for storing program instructions; the transceiver 600 is used for transmitting and receiving data under control of the processor 610; and the processor 610 is configured to read program instructions stored in the memory 620 and perform the following operations:
generating a sensing protocol protocol data unit (PDU), wherein the sensing protocol PDU comprises sensing protocol layer information;
transmitting the sensing protocol PDU to a second communication device through the transceiver 600; wherein the sensing protocol PDU is transmitted through one of the following transmission manners:
   an RRC message;
   a Service Data Adaptation Protocol (SDAP) Service Data Unit (SDU);
   a Packet Data Convergence Protocol (PDCP) Service Data Unit (SDU).

In FIG. 6, the bus architecture may include any number of interconnected buses and bridges that link various circuits represented by one or more processors (represented by processor 610) and memory (represented by memory 620). The bus architecture may also link various other circuits, such as peripheral devices, voltage regulators, and power management circuits, all of which are well known in the art and therefore are not described in further detail herein. The bus interface provides interconnection interfaces. The transceiver 600 may comprise multiple components, including a transmitter and a receiver, which provide units for communication with various other devices over transmission media such as wireless channels, wired channels, and optical fibers.

When the first communication device is a terminal, the user interface 630 may serve as an internal or external interface for connecting peripheral devices according to different user equipment types. The connected devices may include, but are not limited to, a keypad, display, speaker, microphone, or joystick.

The processor 610 is responsible for managing the bus architecture and general processing, while the memory 620 may store data used by the processor 610 during operation execution.

In some embodiments, the processor 610 may be a Central Processing Unit (CPU), an Application-Specific Integrated Circuit (ASIC), a Field-Programmable Gate Array (FPGA), or a Complex Programmable Logic Device (CPLD), and may also adopt a multi-core architecture.

By invoking program instructions stored in the memory, the processor 610 executes any one of the methods provided in the embodiments of the present disclosure according to the obtained executable instructions. The processor 610 and the memory 620 may also be physically disposed separately.

In some embodiments, the transceiver 600 is further configured to:
in a case where the sensing protocol PDU is transmitted through an RRC message, transmit the RRC message to the second communication device, wherein the RRC message includes the sensing protocol PDU; or
in a case where the sensing protocol PDU is transmitted through an SDAP SDU, transmit an SDAP PDU to the second communication device, wherein the SDAP PDU carries the SDAP SDU, and the sensing protocol PDU is the SDAP SDU; or
in a case where the sensing protocol PDU is transmitted through a PDCP SDU, transmit a PDCP PDU to the second communication device, wherein the PDCP PDU carries the PDCP SDU, and the sensing protocol PDU is the PDCP SDU.

In some embodiments, the transceiver 600 is further configured to:
transmit the sensing protocol PDU to the second communication device through a first radio bearer (RB), wherein the first RB is a dedicated RB used for transmitting the sensing protocol PDU.

In some embodiments, the sensing protocol layer information comprises sensing control information and sensing data, and the sensing protocol PDU comprises a first type of sensing protocol PDU and a second type of sensing protocol PDU;
wherein the first type of sensing protocol PDU is used for carrying the sensing control information, and the second type of sensing protocol PDU is used for carrying the sensing data.

In some embodiments, the first type of sensing protocol PDU and the second type of sensing protocol PDU are transmitted through the same transmission manner, or the first type of sensing protocol PDU and the second type of sensing protocol PDU are transmitted through different transmission manners.

In some embodiments, the RRC message is an uplink information transfer message or a downlink information transfer message.

In some embodiments, the transceiver 600 is further configured to:
in a case where the sensing protocol PDU is transmitted through an RRC message, deliver the RRC message to a PDCP entity associated with the first RB, wherein the RRC message is a PDCP SDU;
after processing the PDCP SDU through the PDCP entity associated with the first RB, a PDCP PDU is obtained;
the PDCP PDU is transmitted to the second communication device.

In some embodiments, the transceiver 600 is further configured to:
in a case where the sensing protocol PDU is transmitted through an SDAP SDU, deliver the SDAP PDU to a PDCP entity associated with the first RB, wherein the SDAP PDU is a PDCP SDU;
after processing the PDCP SDU through the PDCP entity associated with the first RB, obtain a PDCP PDU;
transmit the PDCP PDU to the second communication device.

In some embodiments, the transceiver 600 is further configured to:
in a case where the sensing protocol PDU is transmitted through a PDCP SDU, deliver the sensing protocol PDU to a PDCP entity associated with the first RB, wherein the sensing protocol PDU is a PDCP SDU;
after processing the PDCP SDU through the PDCP entity associated with the first RB, obtain a PDCP PDU;
transmit the PDCP PDU to the second communication device.

In some embodiments, the transceiver 600 is further configured to:
deliver the sensing protocol PDU to an SDAP entity, wherein the sensing protocol PDU is an SDAP SDU;
after processing the SDAP SDU through the SDAP entity, obtain an SDAP PDU.

In some embodiments, the SDAP SDU is the SDAP PDU; or
the SDAP PDU comprises the SDAP SDU and an SDAP header, wherein the SDAP header includes at least one of the following:
an indication for QoS flow-to-RB mapping relationship update;
a QoS flow identifier;
a sensing protocol PDU type identifier.

In some embodiments, the PDCP SDU is the PDCP PDU; or
the PDCP PDU comprises the PDCP SDU and a PDCP header, wherein the PDCP header includes a PDCP sequence number.

In some embodiments, the processor 610 is further configured to:
add or modify the first RB according to parameters associated with the first RB.

In some embodiments, the processor 610 is further configured to:
determine parameters associated with the first RB;
transmit first indication information to the second communication device through the transceiver 600, wherein the first indication information is used to indicate parameters associated with the first RB, the first communication device being a base station, and the second communication device being a terminal.

In some embodiments, the transceiver 600 is further configured to:
receive first indication information transmitted by the second communication device, wherein the first indication information is used to indicate parameters associated with the first RB, the first communication device being a terminal, and the second communication device being a base station.

In some embodiments, the processor 610 is further configured to:
in a case where the sensing protocol PDU is an SDAP SDU, establish a PDCP entity associated with the first RB, set PDCP parameters, associate the first RB with an SDAP entity, and set SDAP parameters according to parameters associated with the first RB; or
in a case where the sensing protocol PDU is a PDCP SDU, establish a PDCP entity associated with the first RB and set PDCP parameters according to parameters associated with the first RB.

In some embodiments, the processor 610 is further configured to:
configure PDCP parameters and/or configure SDAP parameters according to parameters associated with the first RB, wherein the configuration includes setting or reconfiguration.

In some embodiments, the parameters associated with the first RB include at least one of the following:
parameters of a PDCP entity associated with the first RB;
parameters of an SDAP entity associated with the first RB;
an identifier of the first RB;
an indication that the first RB is a default RB.

In some embodiments, the parameters of the SDAP entity comprise at least one of the following:
a mapping relationship between QoS flow and RB;
a mapping relationship between sensing protocol PDU type and RB;
presence of an SDAP header;
absence of an SDAP header.

In some embodiments, the processor 610 is further configured to:
in a case where transmission of the sensing protocol PDU is not required, release the first RB; and transmit second indication information to the second communication device, wherein the second indication information is used to indicate release of the first RB, the first communication device being a base station and the second communication device being a terminal; or
receive, through the transceiver 600, second indication information transmitted by the second communication device, wherein the second indication information is used to indicate release of the first RB; and release the first RB according to the second indication information, the first communication device being a terminal and the second communication device being a base station.

In some embodiments, the processor 610 is further configured to:
in a case where the sensing protocol PDU is an SDAP SDU, release the first RB and the association between the first RB and the SDAP entity;
in a case where the sensing protocol PDU is a PDCP SDU, release the first RB.

The communication device according to the embodiments of the present disclosure generates a sensing protocol protocol data unit (PDU), wherein the sensing protocol PDU comprises sensing protocol layer information; and transmits the sensing protocol PDU to a second communication device, wherein the sensing protocol PDU is transmitted through one of the following transmission manners: an RRC message; a Service Data Adaptation Protocol (SDAP) Service Data Unit (SDU); or a Packet Data Convergence Protocol (PDCP) Service Data Unit (SDU). In this way, a sensing protocol layer existing between the first and second communication devices supports sensing functions, thereby decoupling sensing functions from radio resource control functions and improving protocol readability.

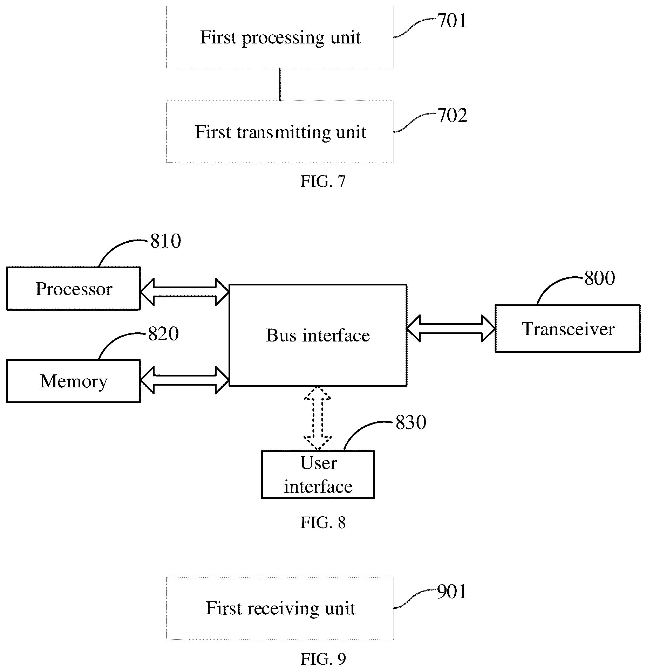

As shown in FIG. 7, an embodiment of the present disclosure further provides an information transmission apparatus comprising:
a first processing unit 701, configured to generate a sensing protocol protocol data unit (PDU), wherein the sensing protocol PDU comprises sensing protocol layer information;
and a first transmitting unit 702, configured to transmit the sensing protocol PDU to a second communication device, wherein the sensing protocol PDU is transmitted through one of the following transmission manners:
   an RRC message;
   a Service Data Adaptation Protocol (SDAP) Service Data Unit (SDU);
   a Packet Data Convergence Protocol (PDCP) Service Data Unit (SDU).

In some embodiments, the first transmitting unit 702 is specifically configured to:
in a case where the sensing protocol PDU is transmitted through an RRC message, transmit the RRC message to the second communication device, wherein the RRC message comprises the sensing protocol PDU; or
in a case where the sensing protocol PDU is transmitted through an SDAP SDU, transmit an SDAP PDU to the second communication device, wherein the SDAP PDU carries an SDAP SDU, and the sensing protocol PDU is the SDAP SDU; or
in a case where the sensing protocol PDU is transmitted through a PDCP SDU, transmit a PDCP PDU to the second communication device, wherein the PDCP PDU carries a PDCP SDU, and the sensing protocol PDU is the PDCP SDU.

In some embodiments, the first transmitting unit 702 is specifically configured to:
transmit the sensing protocol PDU to the second communication device through a first radio bearer (RB), wherein the first RB is a dedicated RB used for transmitting the sensing protocol PDU.

In some embodiments, the sensing protocol layer information comprises sensing control information and sensing data, and the sensing protocol PDU comprises a first type of sensing protocol PDU and a second type of sensing protocol PDU;
wherein the first type of sensing protocol PDU is used to carry the sensing control information, and the second type of sensing protocol PDU is used to carry the sensing data.

In some embodiments, the first type of sensing protocol PDU and the second type of sensing protocol PDU are transmitted through the same transmission manner, or the first type of sensing protocol PDU and the second type of sensing protocol PDU are transmitted through different transmission manners.

In some embodiments, the RRC message is an uplink information transfer message or a downlink information transfer message.

In some embodiments, the first transmitting unit 702 is specifically configured to:
in a case where the sensing protocol PDU is transmitted through an RRC message, deliver the RRC message to a PDCP entity associated with the first RB, wherein the RRC message is a PDCP SDU;
after processing the PDCP SDU through the PDCP entity associated with the first RB, obtain a PDCP PDU;
and transmit the PDCP PDU to the second communication device.

In some embodiments, the first transmitting unit 702 is specifically configured to:
in a case where the sensing protocol PDU is transmitted through an SDAP SDU, deliver the SDAP PDU to a PDCP entity associated with the first RB, wherein the SDAP PDU is a PDCP SDU;
after processing the PDCP SDU through the PDCP entity associated with the first RB, obtain a PDCP PDU;
and transmit the PDCP PDU to the second communication device.

In some embodiments, the first transmitting unit 702 is specifically configured to:
in a case where the sensing protocol PDU is transmitted through a PDCP SDU, deliver the sensing protocol PDU to a PDCP entity associated with the first RB, wherein the sensing protocol PDU is a PDCP SDU;
after processing the PDCP SDU through the PDCP entity associated with the first RB, obtain a PDCP PDU;
and transmit the PDCP PDU to the second communication device.

In some embodiments, the first transmitting unit 702 is specifically configured to:
deliver the sensing protocol PDU to an SDAP entity, wherein the sensing protocol PDU is an SDAP SDU;
and obtain an SDAP PDU after processing the SDAP SDU through the SDAP entity.

In some embodiments, the SDAP SDU is the SDAP PDU; or
the SDAP PDU comprises the SDAP SDU and an SDAP header; wherein the SDAP header comprises at least one of the following:
an indication of an update of a mapping relationship between a QoS flow and an RB;
a QoS flow identifier;
and a sensing protocol PDU type identifier.

In some embodiments, the PDCP SDU is the PDCP PDU; or
the PDCP PDU comprises the PDCP SDU and a PDCP header; wherein the PDCP header comprises a PDCP sequence number.

In some embodiments, the apparatus of the present disclosure further comprises:
a second processing unit, configured to increase or modify the first RB according to parameters related to the first RB.

In some embodiments, the apparatus of the present disclosure further comprises:
a third processing unit, configured to determine parameters related to the first RB;
and a second transmitting unit, configured to transmit first indication information to a second communication device, wherein the first indication information is used to indicate the parameters related to the first RB, the first communication device being a base station and the second communication device being a terminal.

In some embodiments, the apparatus of the present disclosure further comprises:
a second receiving unit, configured to receive first indication information transmitted by the second communication device, wherein the first indication information is used to indicate the parameters related to the first RB, the first communication device being a terminal and the second communication device being a base station.

In some embodiments, the second processing unit is specifically configured to:
in a case where the sensing protocol PDU is an SDAP SDU, establish a PDCP entity associated with the first RB, set PDCP parameters, associate the first RB with an SDAP entity, and set SDAP parameters according to parameters related to the first RB; or
in a case where the sensing protocol PDU is a PDCP SDU, establish a PDCP entity associated with the first RB and set PDCP parameters according to parameters related to the first RB.

In some embodiments, the second processing unit is specifically configured to:
configure PDCP parameters and/or SDAP parameters according to parameters related to the first RB, wherein the configuration comprises setting or reconfiguration.

In some embodiments, the parameters related to the first RB comprise at least one of the following:
parameters of a PDCP entity associated with the first RB;
parameters of an SDAP entity associated with the first RB;
an identifier of the first RB;
and an indication that the first RB is a default RB.

In some embodiments, the parameters of the SDAP entity comprise at least one of the following:
a mapping relationship between a QoS flow and an RB;
a mapping relationship between a sensing protocol PDU type and an RB;
presence of an SDAP header;
and absence of an SDAP header.

In some embodiments, the apparatus of the present disclosure further comprises:
a fourth processing unit, configured to release the first RB when transmission of the sensing protocol PDU is not required; a third transmitting unit, configured to transmit second indication information to the second communication device, wherein the second indication information is used to indicate release of the first RB, the first communication device being a base station and the second communication device being a terminal; or
a third receiving unit, configured to receive second indication information transmitted by the second communication device, wherein the second indication information is used to indicate release of the first RB; and a fifth processing unit, configured to release the first RB according to the second indication information, the first communication device being a terminal and the second communication device being a base station.

In some embodiments, the fourth processing unit or the fifth processing unit is specifically configured to:
in a case where the sensing protocol PDU is an SDAP SDU, release the first RB and an association between the first RB and an SDAP entity;
and in a case where the sensing protocol PDU is a PDCP SDU, release the first RB.

The information transmission apparatus according to embodiments of the present disclosure generates a sensing protocol protocol data unit (PDU), wherein the sensing protocol PDU comprises sensing protocol layer information; and transmits the sensing protocol PDU to a second communication device, wherein the sensing protocol PDU is transmitted via one of the following transmission manners: an RRC message; a Service Data Adaptation Protocol (SDAP) Service Data Unit (SDU); or a Packet Data Convergence Protocol (PDCP) Service Data Unit (SDU). In this way, a sensing protocol layer existing between the first and second communication devices supports a sensing function, thereby decoupling the sensing function from a radio resource control function and improving protocol readability.

It should be noted that the division of units in the embodiments of the present disclosure is schematic and merely represents a logical functional division. In actual implementation, other division manners may be adopted. In addition, each functional unit in the embodiments of the present disclosure may be integrated into one processing unit, may physically exist independently, or two or more units may be integrated into one unit. The integrated unit may be implemented in hardware or as a software functional unit.

When the integrated unit is implemented as a software functional unit and sold or used as an independent product, it may be stored in a processor-readable storage medium. Based on such understanding, the technical solutions of the present disclosure, in essence, or the parts contributing to the related art, may be embodied in the form of a software product. The computer software product is stored in a storage medium and comprises a plurality of instructions for causing a computer device (which may be a personal computer, a server, or a network device, etc.) or a processor to execute all or part of the steps of the method described in the embodiments of the present disclosure. The foregoing storage medium may comprise: a USB flash disk, a mobile hard disk, a Read-Only Memory (ROM), a Random Access Memory (RAM), a magnetic disk, or an optical disk, or any other medium capable of storing program codes.

It should be noted that the above-mentioned apparatus provided in the embodiments of the present disclosure is capable of implementing all method steps realized in the method embodiments described above and achieving the same technical effects. Therefore, detailed description of parts and beneficial effects identical to those in the method embodiments will not be repeated herein.

In some embodiments of the present disclosure, a processor-readable storage medium is further provided, the processor-readable storage medium storing program instructions, the program instructions being configured to cause the processor to perform the following steps:
generate a sensing protocol protocol data unit (PDU), wherein the sensing protocol PDU comprises sensing protocol layer information;
transmit the sensing protocol PDU to a second communication device, wherein the sensing protocol PDU is transmitted via one of the following transmission manners:
   an RRC message;
   a Service Data Adaptation Protocol (SDAP) Service Data Unit (SDU);
   or a Packet Data Convergence Protocol (PDCP) Service Data Unit (SDU).

When executed by the processor, the program is capable of implementing all embodiments of the method applied to the first communication device side As shown in FIG. 1. For the sake of brevity, identical parts are not described again herein.

As shown in FIG. 8, an embodiment of the present disclosure further provides a communication device, which is a second communication device, comprising: a memory 820, a transceiver 800, and a processor 810; the memory 820 being configured to store a computer program; the transceiver 800 being configured to transmit and receive data under control of the processor 810; and the processor 810 being configured to read the computer program stored in the memory 820 and execute the following operations:
receive, through the transceiver 800, a sensing protocol protocol data unit (PDU) transmitted by a first communication device, wherein the sensing protocol PDU comprises sensing protocol layer information;
wherein the sensing protocol PDU is transmitted via one of the following transmission manners:
   an RRC message;
   a Service Data Adaptation Protocol (SDAP) Service Data Unit (SDU);
   or a Packet Data Convergence Protocol (PDCP) Service Data Unit (SDU).

In FIG. 8, the bus architecture may include any number of interconnected buses and bridges, which interconnect various circuits represented by one or more processors represented by the processor 810 and a memory represented by the memory 820. The bus architecture may also interconnect various other circuits such as peripheral devices, voltage regulators, and power management circuits, which are well known in the art and will not be further described herein. The bus interface provides an interface. The transceiver 800 may comprise multiple components, including a transmitter and a receiver, providing units for communication with various other devices over transmission media, the transmission media including wireless channels, wired channels, optical cables, and the like.

When the second communication device is a terminal, the user interface 830 may be an interface capable of externally or internally connecting required devices depending on different user devices, and the connected devices may include but are not limited to a keypad, a display, a loudspeaker, a microphone, or a joystick.

The processor 810 is responsible for managing the bus architecture and general processing, and the memory 820 is capable of storing data used by the processor 810 during operation.

The processor 810 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

In some embodiments, the transceiver 800 is further configured to:
in a case where the sensing protocol PDU is transmitted via an RRC message, receive a Radio Resource Control (RRC) message transmitted by the first communication device, wherein the RRC message comprises the sensing protocol PDU; or
in a case where the sensing protocol PDU is transmitted via an SDAP SDU, receive an SDAP PDU transmitted by the first communication device, wherein the SDAP PDU carries an SDAP Service Data Unit (SDU), and the sensing protocol PDU is the SDAP SDU; or
in a case where the sensing protocol PDU is transmitted via a PDCP SDU, receive a PDCP PDU transmitted by the first communication device, wherein the PDCP PDU carries a PDCP Service Data Unit (SDU), and the sensing protocol PDU is the PDCP SDU.

In some embodiments, the transceiver 800 is further configured to:
receive, through a first radio bearer (RB), the sensing protocol PDU transmitted by a first communication device, wherein the first RB is a dedicated RB used for transmitting the sensing protocol PDU.

In some embodiments, the sensing protocol layer information comprises sensing control information and sensing data, and the sensing protocol PDU comprises a first-type sensing protocol PDU and a second-type sensing protocol PDU;
wherein the first-type sensing protocol PDU is used to carry the sensing control information, and the second-type sensing protocol PDU is used to carry the sensing data.

In some embodiments, the first-type sensing protocol PDU and the second-type sensing protocol PDU are transmitted through the same transmission manner among the transmission manners described above; or the first-type sensing protocol PDU and the second-type sensing protocol PDU are transmitted through different transmission manners among the transmission manners described above.

In some embodiments, the RRC message is an uplink information transfer message or a downlink information transfer message.

In some embodiments, the transceiver 800 is further configured to:
in a case where the sensing protocol PDU is transmitted via an RRC message, receive a PDCP PDU transmitted by the first communication device;
obtain a PDCP SDU after processing the PDCP PDU through a PDCP entity associated with the first RB;
and deliver the PDCP SDU to an RRC layer, wherein the PDCP SDU is an RRC message, and obtain the sensing protocol PDU after processing the RRC message through the RRC layer.

In some embodiments, the transceiver 800 is further configured to:
in a case where the sensing protocol PDU is transmitted via an SDAP SDU, receive a PDCP PDU transmitted by the first communication device;
obtain a PDCP SDU after processing the PDCP PDU through a PDCP entity associated with the first RB;
deliver the PDCP SDU to an SDAP entity, wherein the PDCP SDU is an SDAP PDU;
and obtain an SDAP SDU after processing the SDAP PDU through the SDAP entity, wherein the SDAP SDU is the sensing protocol PDU.

In some embodiments, the transceiver 800 is further configured to:
in a case where the sensing protocol PDU is transmitted via a PDCP SDU, receive a PDCP PDU transmitted by the first communication device;
and obtain a PDCP SDU after processing the PDCP PDU through a PDCP entity associated with the first RB, wherein the PDCP SDU is the sensing protocol PDU.

In some embodiments, the SDAP SDU is the SDAP PDU; or
the SDAP PDU comprises the SDAP SDU and an SDAP header; wherein the SDAP header comprises at least one of the following:
an indication of an update of a mapping relationship between a QoS flow and an RB;
a QoS flow identifier;
and a sensing protocol PDU type identifier.

In some embodiments, the PDCP SDU is the PDCP PDU; or
the PDCP PDU comprises the PDCP SDU and a PDCP header; wherein the PDCP header comprises a PDCP sequence number.

In some embodiments, the processor 810 is further configured to:
increase or modify the first RB according to parameters related to the first RB.

In some embodiments, the processor 810 is further configured to:
determine parameters related to the first RB;
and transmit, through the transceiver 800, first indication information to the first communication device, wherein the first indication information is used to indicate the parameters related to the first RB, the first communication device being a terminal and the second communication device being a base station.

In some embodiments, the transceiver 800 is further configured to:
receive first indication information transmitted by the first communication device, wherein the first indication information is used to indicate the parameters related to the first RB, the first communication device being a base station and the second communication device being a terminal.

In some embodiments, the processor 810 is further configured to:
in a case where the sensing protocol PDU is an SDAP SDU, establish a PDCP entity associated with the first RB, set PDCP parameters, associate the first RB with an SDAP entity, and set SDAP parameters according to parameters related to the first RB; or
in a case where the sensing protocol PDU is a PDCP SDU, establish a PDCP entity associated with the first RB and set PDCP parameters according to parameters related to the first RB.

In some embodiments, the processor 810 is further configured to:
configure PDCP parameters and/or configure SDAP parameters according to parameters related to the first RB, wherein the configuration comprises setting or reconfiguration.

In some embodiments, the parameters related to the first RB comprise at least one of the following:
parameters of a PDCP entity associated with the first RB;
parameters of an SDAP entity associated with the first RB;
an identifier of the first RB;
and an indication that the first RB is a default RB.

In some embodiments, the parameters of the SDAP entity comprise at least one of the following:
a mapping relationship between a QoS flow and an RB;
a mapping relationship between a sensing protocol PDU type and an RB;
presence of an SDAP header;
absence of an SDAP header;
and a default RB.

In some embodiments, the processor 810 is further configured to:
release the first RB when transmission of the sensing protocol PDU is not required; and transmit second indication information to the first communication device, wherein the second indication information is used to indicate release of the first RB, the first communication device being a terminal and the second communication device being a base station; or
receive, through the transceiver 800, second indication information transmitted by the first communication device, wherein the second indication information is used to indicate release of the first RB; and release the first RB according to the second indication information, the first communication device being a base station and the second communication device being a terminal.

In some embodiments, the processor 810 is further configured to:
in a case where the sensing protocol PDU is an SDAP SDU, release the first RB and an association between the first RB and an SDAP entity;
and in a case where the sensing protocol PDU is a PDCP SDU, release the first RB.

The communication device according to embodiments of the present disclosure receives a sensing protocol protocol data unit (PDU) transmitted by a first communication device, wherein the sensing protocol PDU comprises sensing protocol layer information; and the sensing protocol PDU is transmitted through one of the following transmission manners: an RRC message; a Service Data Adaptation Protocol (SDAP) Service Data Unit (SDU); or a Packet Data Convergence Protocol (PDCP) Service Data Unit (SDU). In this way, a sensing protocol layer existing between the first and second communication devices supports a sensing function, thereby decoupling the sensing function from a radio resource control function and improving protocol readability.

As shown in FIG. 9, an embodiment of the present disclosure further provides an information transmission apparatus, comprising:
a first receiving unit 901, configured to receive a sensing protocol protocol data unit (PDU) transmitted by a first communication device, wherein the sensing protocol PDU comprises sensing protocol layer information;
wherein the sensing protocol PDU is transmitted via one of the following transmission manners:
   an RRC message;
   a Service Data Adaptation Protocol (SDAP) Service Data Unit (SDU);
   or a Packet Data Convergence Protocol (PDCP) Service Data Unit (SDU).

In some embodiments, the first receiving unit 901 is specifically configured to:
in a case where the sensing protocol PDU is transmitted via an RRC message, receive a Radio Resource Control (RRC) message transmitted by the first communication device, wherein the RRC message comprises the sensing protocol PDU; or
in a case where the sensing protocol PDU is transmitted via an SDAP SDU, receive an SDAP PDU transmitted by the first communication device, wherein the SDAP PDU carries an SDAP Service Data Unit (SDU), and the sensing protocol PDU is the SDAP SDU; or
in a case where the sensing protocol PDU is transmitted via a PDCP SDU, receive a PDCP PDU transmitted by the first communication device, wherein the PDCP PDU carries a PDCP Service Data Unit (SDU), and the sensing protocol PDU is the PDCP SDU.

In some embodiments, the first receiving unit 901 is specifically configured to:
receive, through a first radio bearer (RB), the sensing protocol PDU transmitted by the first communication device, wherein the first RB is a dedicated RB used for transmitting the sensing protocol PDU.

In some embodiments, the sensing protocol layer information comprises sensing control information and sensing data, and the sensing protocol PDU comprises a first-type sensing protocol PDU and a second-type sensing protocol PDU;
wherein the first-type sensing protocol PDU is used to carry the sensing control information, and the second-type sensing protocol PDU is used to carry the sensing data.

In some embodiments, the first-type sensing protocol PDU and the second-type sensing protocol PDU are transmitted through the same transmission manner among the transmission manners, or the first-type sensing protocol PDU and the second-type sensing protocol PDU are transmitted through different transmission manners among the transmission manners.

In some embodiments, the RRC message is an uplink information transfer message or a downlink information transfer message.

In some embodiments, the first receiving unit 901 is specifically configured to:
in a case where the sensing protocol PDU is transmitted through an RRC message, receive a PDCP PDU transmitted by the first communication device;
process the PDCP PDU through a PDCP entity associated with the first RB to obtain a PDCP SDU;
and deliver the PDCP SDU to an RRC layer, wherein the PDCP SDU is an RRC message; and process the RRC message through the RRC layer to obtain the sensing protocol PDU.

In some embodiments, the first receiving unit 901 is specifically configured to:
in a case where the sensing protocol PDU is transmitted through an SDAP SDU, receive a PDCP PDU transmitted by the first communication device;
process the PDCP PDU through a PDCP entity associated with the first RB to obtain a PDCP SDU;
deliver the PDCP SDU to an SDAP entity, wherein the PDCP SDU is an SDAP PDU;
and process the SDAP PDU through the SDAP entity to obtain an SDAP SDU, wherein the SDAP SDU is the sensing protocol PDU.

In some embodiments, the first receiving unit 901 is specifically configured to:
in a case where the sensing protocol PDU is transmitted through a PDCP SDU, receive a PDCP PDU transmitted by the first communication device;
and process the PDCP PDU through a PDCP entity associated with the first RB to obtain a PDCP SDU, wherein the PDCP SDU is the sensing protocol PDU.

In some embodiments, the SDAP SDU is the SDAP PDU; or
the SDAP PDU comprises the SDAP SDU and an SDAP header, wherein the SDAP header comprises at least one of the following:
an indication for updating a mapping relationship between a QoS flow and an RB;
a QoS flow identifier;
and a sensing protocol PDU type identifier.

In some embodiments, the PDCP SDU is the PDCP PDU; or
the PDCP PDU comprises the PDCP SDU and a PDCP header, wherein the PDCP header comprises a PDCP sequence number.

In some embodiments, the apparatus according to the embodiments of the present disclosure further comprises:
a sixth processing unit, configured to increase or modify the first RB according to parameters related to the first RB.

In some embodiments, the apparatus according to the embodiments of the present disclosure further comprises:
a seventh processing unit, configured to determine parameters related to the first RB;
and a fourth transmitting unit, configured to transmit first indication information to the first communication device, wherein the first indication information is used to indicate parameters related to the first RB, the first communication device being a terminal and the second communication device being a base station.

In some embodiments, the apparatus according to the embodiments of the present disclosure further comprises:
a fourth receiving unit, configured to receive first indication information transmitted by the first communication device, wherein the first indication information is used to indicate parameters related to the first RB, the first communication device being a base station and the second communication device being a terminal.

In some embodiments, the sixth processing unit is specifically configured to:
in a case where the sensing protocol PDU is an SDAP SDU, establish a PDCP entity associated with the first RB, set PDCP parameters, associate the first RB with an SDAP entity, and set SDAP parameters according to parameters related to the first RB; or
in a case where the sensing protocol PDU is a PDCP SDU, establish a PDCP entity associated with the first RB and set PDCP parameters according to parameters related to the first RB.

In some embodiments, the sixth processing unit is specifically configured to:
configure PDCP parameters and/or configure SDAP parameters according to parameters related to the first RB, wherein the configuration comprises setting or reconfiguring.

In some embodiments, the parameters related to the first RB comprise at least one of the following:
parameters of a PDCP entity associated with the first RB; parameters of an SDAP entity associated with the first RB; an identifier of the first RB; and the first RB being a default RB.

In some embodiments, parameters of the SDAP entity comprise at least one of the following:
a mapping relationship between a QoS flow and an RB; a mapping relationship between a sensing protocol PDU type and an RB; existence of an SDAP header; absence of an SDAP header; and a default RB.

In some embodiments, the apparatus according to embodiments of the present disclosure further comprises:
an eighth processing unit, configured to release the first RB in a case where transmission of the sensing protocol PDU is not required; a fifth transmitting unit, configured to transmit second indication information to the first communication device, wherein the second indication information is used to indicate release of the first RB, the first communication device being a terminal and the second communication device being a base station; or
a fifth receiving unit, configured to receive second indication information transmitted by the first communication device, wherein the second indication information is used to indicate release of the first RB; and a ninth processing unit, configured to release the first RB according to the second indication information, the first communication device being a base station and the second communication device being a terminal.

In some embodiments, the eighth processing unit or the ninth processing unit is specifically configured to:
in a case where the sensing protocol PDU is an SDAP SDU, release the first RB and an association between the first RB and an SDAP entity;
and in a case where the sensing protocol PDU is a PDCP SDU, release the first RB.

The information transmission apparatus according to embodiments of the present disclosure receives a sensing protocol protocol data unit (PDU) transmitted by a first communication device, wherein the sensing protocol PDU comprises sensing protocol layer information; the sensing protocol PDU is transmitted through one of the following transmission manners: an RRC message; a service data adaptation protocol (SDAP) service data unit (SDU); or a packet data convergence protocol (PDCP) service data unit (SDU). Thus, a sensing protocol layer existing between the first communication device and the second communication device is used to support a sensing function, decouple the sensing function from a radio resource control function, and improve protocol readability.

It should be noted that the division of units in the embodiments of the present disclosure is schematic, and is merely a logical functional division. In actual implementation, other divisions may be adopted. In addition, each functional unit in the embodiments of the present disclosure may be integrated into one processing unit, or may exist separately, or two or more units may be integrated into one unit. The integrated units may be implemented in hardware form or in the form of software functional units.

If the integrated units are implemented in the form of software functional units and sold or used as independent products, they may be stored in a processor-readable storage medium. Based on this understanding, the technical solution of the present disclosure, in essence, or a part thereof that contributes to the related art, may be embodied in the form of a software product. The computer software product is stored in a storage medium and comprises several instructions for enabling a computer device (which may be a personal computer, a server, or a network device) or a processor to execute all or part of the steps of the methods described in the embodiments of the present disclosure. The foregoing storage medium comprises various media capable of storing program codes, including a USB flash disk, a mobile hard disk, a read-only memory (ROM), a random access memory (RAM), a magnetic disk, or an optical disk.

It should be noted that the apparatus provided in the embodiments of the present disclosure can implement all the method steps realized by the corresponding method embodiments and can achieve the same technical effects. Therefore, the parts identical to the method embodiments and the beneficial effects thereof will not be described in detail herein.

In some embodiments of the present disclosure, a processor-readable storage medium is further provided, wherein the processor-readable storage medium stores program instructions configured to cause the processor to perform the following steps:
receiving a sensing protocol protocol data unit (PDU) transmitted by a first communication device, wherein the sensing protocol PDU comprises sensing protocol layer information;
the sensing protocol PDU being transmitted through one of the following transmission manners:
   an RRC message;
   a service data adaptation protocol (SDAP) service data unit (SDU); and
   a packet data convergence protocol (PDCP) service data unit (SDU).

When executed by a processor, the program is capable of implementing all the implementation manners of the method embodiment applied to the second communication device side as shown in FIG. 5. To avoid redundancy, details are not repeated herein.

The technical solution provided in the embodiments of the present disclosure can be applied to various systems, particularly to a fifth generation (5th-Generation, 5G) mobile communication system. For example, the applicable systems may include a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) system, and a 5G New Radio (NR) system. Each of these systems comprises terminal devices and network devices. The system may further comprise a core network part, such as an Evolved Packet System (EPS) or a 5G System (5GS).

The terminal device involved in the embodiments of the present disclosure may refer to a device that provides voice and/or data connectivity for a user, such as a handheld device with wireless connection capability or another processing device connected to a wireless modem. In different systems, the terminal device may be referred to by different names. For example, in a 5G system, the terminal device may be referred to as a User Equipment (UE). A wireless terminal device may communicate with one or more core networks (CN) through a Radio Access Network (RAN). The wireless terminal device may be a mobile terminal device, such as a mobile phone (also referred to as a cellular phone) or a computer equipped with a mobile terminal device, which may be a portable, pocket-sized, handheld, computer-integrated, or vehicle-mounted mobile apparatus that exchanges voice and/or data with the RAN. Examples include a Personal Communication Service (PCS) phone, a cordless phone, a Session Initiated Protocol (SIP) phone, a Wireless Local Loop (WLL) station, or a Personal Digital Assistant (PDA). The wireless terminal device may also be referred to as a system, a subscriber unit, a subscriber station, a mobile station, a mobile terminal, a remote station, an access point, a remote terminal, an access terminal, a user terminal, a user agent, or a user device. The embodiments of the present disclosure are not limited thereto.

The network device involved in the embodiments of the present disclosure may be a base station, which may comprise multiple cells serving terminal devices. Depending on the specific application scenario, the base station may also be referred to as an access point, or a device in an access network that communicates with wireless terminal devices over an air interface through one or more sectors, or by other names. The network device may be used to convert received air frames and Internet Protocol (IP) packets to each other, functioning as a router between the wireless terminal device and the rest of the access network, wherein the rest of the access network may include an IP communication network. The network device may also coordinate attribute management of the air interface. For example, the network device involved in the embodiments of the present disclosure may be a Base Transceiver Station (BTS) in a Global System for Mobile communications (GSM) or a Code Division Multiple Access (CDMA) system, a NodeB in a Wideband Code Division Multiple Access (WCDMA) system, an evolved Node B (eNB or e-NodeB) in a Long Term Evolution (LTE) system, or a 5G base station (gNB) in a next generation 5G network architecture. It may also be a Home evolved Node B (HeNB), a relay node, a femto base station, or a pico base station. The embodiments of the present disclosure are not limited thereto. In some network architectures, the network device may comprise a Centralized Unit (CU) node and a Distributed Unit (DU) node, which may also be geographically separated.

The network device and the terminal device may respectively perform Multiple Input Multiple Output (MIMO) transmission by using one or more antennas. The MIMO transmission may be a Single User MIMO (SU-MIMO) or a Multiple User MIMO (MU-MIMO). Depending on the combination and number of antennas, the MIMO transmission may be a two-dimensional MIMO (2D-MIMO), a three-dimensional MIMO (3D-MIMO), a full-dimension MIMO (FD-MIMO), or a massive MIMO. It may also be diversity transmission, precoding transmission, or beamforming transmission.

Those skilled in the art should understand that the embodiments of the present disclosure may be provided as a method, a system, or a computer program product. Therefore, the present disclosure may be implemented in the form of a purely hardware embodiment, a purely software embodiment, or an embodiment combining software and hardware aspects. Moreover, the present disclosure may be embodied in the form of a computer program product implemented on one or more computer-usable storage media containing computer-usable program codes, including but not limited to magnetic storage and optical storage media.

The present disclosure has been described with reference to flowcharts and/or block diagrams of methods, apparatuses (systems), and computer program products according to embodiments of the present disclosure. It should be understood that each flow and/or block in the flowcharts and/or block diagrams may be implemented by computer-executable instructions. These computer-executable instructions may be provided to a processor of a general-purpose computer, a special-purpose computer, an embedded processor, or other programmable data processing apparatus to produce a machine, such that the instructions executed by the processor of the computer or the programmable data processing apparatus create means for implementing the functions specified in one or more flows of the flowchart and/or one or more blocks of the block diagram.

These processor-executable instructions may also be stored in a processor-readable memory that directs a computer or other programmable data processing apparatus to operate in a specific manner, such that the instructions stored in the processor-readable memory produce an article of manufacture comprising instruction means for implementing the functions specified in one or more flows of the flowchart and/or one or more blocks of the block diagram.

These processor-executable instructions may also be loaded onto a computer or other programmable data processing apparatus to cause a series of operational steps to be performed by the computer or other programmable apparatus to produce a computer-implemented process, such that the instructions executed on the computer or other programmable apparatus provide steps for implementing the functions specified in one or more flows of the flowchart and/or one or more blocks of the block diagram.

It should be noted that the division of the above modules is merely a logical functional division, and in actual implementation, all or part of them may be integrated into one physical entity, or physically separated. The modules may be implemented entirely in software form invoked by processing elements, entirely in hardware form, or partly in software form invoked by processing elements and partly in hardware form. For example, the determining module may be implemented as an independent processing element, or integrated into one chip of the apparatus described above. In addition, it may be stored as program code in the memory of the apparatus and executed by one of the processing elements of the apparatus to perform the functions of the determining module. The other modules are implemented in a similar manner. Furthermore, all or part of the modules may be integrated together or implemented independently. The processing element described herein may be an integrated circuit with signal processing capability. During implementation, each step of the method described above or each of the modules may be completed by hardware integrated logic circuits or by software instructions executed by the processing element.

For example, each module, unit, subunit, or submodule may be one or more integrated circuits configured to implement the above methods, such as one or more Application Specific Integrated Circuits (ASICs), one or more Digital Signal Processors (DSPs), or one or more Field Programmable Gate Arrays (FPGAs). For another example, when a module is implemented in the form of a processing element scheduling program code, the processing element may be a general-purpose processor, such as a Central Processing Unit (CPU) or another processor capable of invoking program code. Furthermore, the modules may be integrated together and implemented in the form of a System-on-a-Chip (SoC).

The terms "first" , "second" , and the like in the specification and claims of the present disclosure are used to distinguish similar objects and are not intended to indicate any particular order or sequence. It should be understood that such data may be interchanged where appropriate so that the embodiments of the present disclosure described herein may be implemented in orders other than those illustrated or described herein. In addition, the terms "comprise" and "include" , and any variations thereof, are intended to cover non-exclusive inclusion. For example, a process, method, system, product, or device that comprises a series of steps or units is not limited to only those clearly listed steps or units but may include other steps or units not clearly listed or inherent to such process, method, product, or device. Furthermore, the term "and/or" as used in the specification and claims means at least one of the connected objects. For example, "A and/or B and/or C" refers to seven possible combinations: A alone, B alone, C alone, A and B together, B and C together, A and C together, and A, B, and C together. Similarly, the expression "at least one of A and B" should be understood as "A alone, B alone, or A and B together."

Obviously, those skilled in the art may make various modifications and variations to the present disclosure without departing from the spirit and scope of the present disclosure. Therefore, if these modifications and variations fall within the scope of the claims of the present disclosure and their equivalents, the present disclosure is intended to cover such modifications and variations as well.

## Claims

1. A method for information transmission, applied to a first communication device, the method comprising:
generating a sensing protocol protocol data unit (PDU), wherein the sensing protocol PDU comprises sensing protocol layer information; and
transmitting the sensing protocol PDU to a second communication device,
wherein the sensing protocol PDU is transmitted through one of the following transmission manners:
an RRC message;
a Service Data Adaptation Protocol (SDAP) service data unit (SDU);
a Packet Data Convergence Protocol (PDCP) service data unit (SDU).

2. The method according to claim 1, wherein in a case where the sensing protocol PDU is transmitted through the RRC message, the transmitting the sensing protocol PDU to the second communication device comprises:
transmitting the RRC message to the second communication device, the RRC message comprising the sensing protocol PDU; or,
in a case where the sensing protocol PDU is transmitted through the SDAP SDU, the transmitting the sensing protocol PDU to the second communication device comprises:
transmitting an SDAP PDU to the second communication device, the SDAP PDU carrying the SDAP SDU, and the sensing protocol PDU being the SDAP SDU; or,
in a case where the sensing protocol PDU is transmitted through the PDCP SDU, the transmitting the sensing protocol PDU to the second communication device comprises:
transmitting a PDCP PDU to the second communication device, the PDCP PDU carrying the PDCP SDU, and the sensing protocol PDU being the PDCP SDU.

3. The method according to claim 1, wherein the transmitting the sensing protocol PDU to the second communication device comprises:
transmitting the sensing protocol PDU to the second communication device through a first radio bearer (RB), wherein the first RB is a dedicated RB used for transmitting the sensing protocol PDU.

4. The method according to claim 1, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

5. The method according to claim 4, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

6. The method according to claim 1, wherein the RRC message is an uplink information transfer message or a downlink information transfer message.

7. The method according to claim 3, wherein in a case where the sensing protocol PDU is transmitted through the RRC message, the transmitting the sensing protocol PDU to the second communication device through the first radio bearer (RB) comprises:
delivering the RRC message to a PDCP entity associated with the first RB, the RRC message being a PDCP SDU;
processing the PDCP SDU through the PDCP entity associated with the first RB to obtain a PDCP PDU; and
transmitting the PDCP PDU to the second communication device.

8. The method according to claim 3, wherein in a case where the sensing protocol PDU is transmitted through the SDAP SDU, the transmitting the sensing protocol PDU to the second communication device through the first radio bearer (RB) comprises:
delivering an SDAP PDU to a PDCP entity associated with the first RB, the SDAP PDU being a PDCP SDU;
processing the PDCP SDU through the PDCP entity associated with the first RB to obtain a PDCP PDU; and
transmitting the PDCP PDU to the second communication device.

9. The method according to claim 3, wherein in a case where the sensing protocol PDU is transmitted through the PDCP SDU, the transmitting the sensing protocol PDU to the second communication device through the first radio bearer (RB) comprises:
delivering the sensing protocol PDU to a PDCP entity associated with the first RB, the sensing protocol PDU being a PDCP SDU;
processing the PDCP SDU through the PDCP entity associated with the first RB to obtain a PDCP PDU; and
transmitting the PDCP PDU to the second communication device.

10. The method according to claim 8, wherein before delivering the SDAP PDU to the PDCP entity associated with the first RB, the method further comprises:
delivering the sensing protocol PDU to an SDAP entity, the sensing protocol PDU being an SDAP SDU; and
processing the SDAP SDU through the SDAP entity to obtain the SDAP PDU.

11. The method according to claim 10, wherein the SDAP SDU is the SDAP PDU; or, the SDAP PDU comprises the SDAP SDU and an SDAP header, wherein the SDAP header comprises at least one of the following:
an indication for updating a mapping relationship between a QoS flow and an RB;
a QoS flow identifier;
a sensing protocol PDU type identifier.

12. The method according to any one of claims 7 to 9, wherein the PDCP SDU is the PDCP PDU; or, the PDCP PDU comprises the PDCP SDU and a PDCP header, wherein the PDCP header comprises a PDCP sequence number.

13. The method according to claim 3, wherein before transmitting the sensing protocol PDU to the second communication device through the first radio bearer (RB), the method further comprises:
adding or modifying the first RB according to parameters associated with the first RB.

14. The method according to claim 13, further comprising:
determining parameters associated with the first RB; and
transmitting first indication information to the second communication device, wherein the first indication information is used to indicate the parameters associated with the first RB, the first communication device being a base station, and the second communication device being a terminal.

15. The method according to claim 13, further comprising:
receiving first indication information transmitted by the second communication device, wherein the first indication information is used to indicate the parameters associated with the first RB, the first communication device being a terminal, and the second communication device being a base station.

16. The method according to claim 13, wherein the adding the first RB according to the parameters associated with the first RB comprises:
in a case where the sensing protocol PDU is an SDAP SDU, establishing a PDCP entity associated with the first RB, setting PDCP parameters, associating the first RB with an SDAP entity, and setting SDAP parameters according to the parameters associated with the first RB; or,
in a case where the sensing protocol PDU is a PDCP SDU, establishing a PDCP entity associated with the first RB and setting PDCP parameters according to the parameters associated with the first RB.

17. The method according to claim 13, wherein the modifying the first RB according to the parameters associated with the first RB comprises:
configuring PDCP parameters and/or configuring SDAP parameters according to the parameters associated with the first RB, wherein the configuring comprises setting or reconfiguring.

18. The method according to claim 13, wherein the parameters associated with the first RB comprise at least one of the following:
parameters of a PDCP entity associated with the first RB;
parameters of an SDAP entity associated with the first RB;
an identifier of the first RB;
the first RB being a default RB.

19. The method according to claim 18, wherein the parameters of the SDAP entity comprise at least one of the following:
a mapping relationship between a QoS flow and an RB;
a mapping relationship between a sensing protocol PDU type and an RB;
presence of an SDAP header;
absence of an SDAP header.

20. The method according to claim 3, further comprising:
in a case where transmission of the sensing protocol PDU is not required, releasing the first RB; transmitting second indication information to the second communication device, wherein the second indication information is used to indicate release of the first RB, the first communication device being a base station, and the second communication device being a terminal; or,
receiving second indication information transmitted by the second communication device, wherein the second indication information is used to indicate release of the first RB; and releasing the first RB according to the second indication information, the first communication device being a terminal, and the second communication device being a base station.

21. The method according to claim 20, wherein the releasing the first RB comprises:
in a case where the sensing protocol PDU is an SDAP SDU, releasing the first RB and an association between the first RB and an SDAP entity;
in a case where the sensing protocol PDU is a PDCP SDU, releasing the first RB.

22. A method for information transmission, applied to a second communication device, the method comprising:
receiving a sensing protocol protocol data unit (PDU) transmitted by a first communication device, wherein the sensing protocol PDU comprises sensing protocol layer information;
wherein the sensing protocol PDU is transmitted through one of the following transmission manners:
an RRC message;
a Service Data Adaptation Protocol (SDAP) service data unit (SDU);
a Packet Data Convergence Protocol (PDCP) service data unit (SDU).

23. The method according to claim 22, wherein:
in a case where the sensing protocol PDU is transmitted through an RRC message, the receiving the sensing protocol protocol data unit (PDU) transmitted by the first communication device comprises:
receiving an RRC message transmitted by the first communication device, the RRC message comprising the sensing protocol PDU; or,
in a case where the sensing protocol PDU is transmitted through an SDAP SDU, the receiving the sensing protocol protocol data unit (PDU) transmitted by the first communication device comprises:
receiving an SDAP PDU transmitted by the first communication device, the SDAP PDU carrying an SDAP service data unit (SDU), and the sensing protocol PDU being the SDAP SDU; or,
in a case where the sensing protocol PDU is transmitted through a PDCP SDU, the receiving the sensing protocol protocol data unit (PDU) transmitted by the first communication device comprises:
receiving a PDCP PDU transmitted by the first communication device, the PDCP PDU carrying a PDCP SDU, and the sensing protocol PDU being the PDCP SDU.

24. The method according to claim 22, wherein the receiving the sensing protocol protocol data unit (PDU) transmitted by the first communication device comprises:
receiving the sensing protocol PDU transmitted by the first communication device through a first radio bearer (RB), wherein the first RB is a dedicated RB used for transmitting the sensing protocol PDU.

25. The method according to claim 22, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

26. The method according to claim 25, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

27. The method according to claim 22, wherein the RRC message is an uplink information transfer message or a downlink information transfer message.

28. The method according to claim 24, wherein in a case where the sensing protocol PDU is transmitted through the RRC message, the receiving the sensing protocol PDU transmitted by the first communication device through the first radio bearer (RB) comprises:
receiving a PDCP PDU transmitted by the first communication device;
processing the PDCP PDU through a PDCP entity associated with the first RB to obtain a PDCP SDU;
delivering the PDCP SDU to an RRC layer, the PDCP SDU being an RRC message; and
processing the RRC message through the RRC layer to obtain the sensing protocol PDU.

29. The method according to claim 24, wherein in a case where the sensing protocol PDU is transmitted through an SDAP SDU, the receiving the sensing protocol PDU transmitted by the first communication device through the first radio bearer (RB) comprises:
receiving a PDCP PDU transmitted by the first communication device;
processing the PDCP PDU through a PDCP entity associated with the first RB to obtain a PDCP SDU;
delivering the PDCP SDU to an SDAP entity, the PDCP SDU being an SDAP PDU;
processing the SDAP PDU through the SDAP entity to obtain an SDAP SDU, the SDAP SDU being the sensing protocol PDU.

30. The method according to claim 24, wherein in a case where the sensing protocol PDU is transmitted through a PDCP SDU, the receiving the sensing protocol PDU transmitted by the first communication device through the first radio bearer (RB) comprises:
receiving a PDCP PDU transmitted by the first communication device; and
processing the PDCP PDU through a PDCP entity associated with the first RB to obtain a PDCP SDU, the PDCP SDU being the sensing protocol PDU.

31. The method according to claim 29, wherein the SDAP SDU is the SDAP PDU; or,
the SDAP PDU comprises the SDAP SDU and an SDAP header, wherein the SDAP header comprises at least one of the following:
an indication for updating a mapping relationship between a QoS flow and an RB;
a QoS flow identifier;
a sensing protocol PDU type identifier.

32. The method according to any one of claims 28 to 30, wherein the PDCP SDU is the PDCP PDU; or,
the PDCP PDU comprises the PDCP SDU and a PDCP header, wherein the PDCP header comprises a PDCP sequence number.

33. The method according to claim 24, wherein before receiving the sensing protocol protocol data unit (PDU) transmitted by the first communication device through a first radio bearer (RB), the method further comprises:
adding or modifying the first RB according to parameters associated with the first RB.

34. The method according to claim 33, further comprising:
determining parameters associated with the first RB; and
transmitting first indication information to the first communication device, wherein the first indication information is used to indicate the parameters associated with the first RB, the first communication device being a terminal, and the second communication device being a base station.

35. The method according to claim 33, further comprising:
receiving first indication information transmitted by the first communication device, wherein the first indication information is used to indicate the parameters associated with the first RB, the first communication device being a base station, and the second communication device being a terminal.

36. The method according to claim 33, wherein the adding the first RB according to the parameters associated with the first RB comprises:
in a case where the sensing protocol PDU is an SDAP SDU, establishing a PDCP entity associated with the first RB, setting PDCP parameters, associating the first RB with an SDAP entity, and setting SDAP parameters according to the parameters associated with the first RB; or,
in a case where the sensing protocol PDU is a PDCP SDU, establishing a PDCP entity associated with the first RB and setting PDCP parameters according to the parameters associated with the first RB.

37. The method according to claim 33, wherein the modifying the first RB according to the parameters associated with the first RB comprises:
configuring PDCP parameters and/or configuring SDAP parameters according to the parameters associated with the first RB, wherein the configuring comprises setting or reconfiguring.

38. The method according to claim 33, wherein the parameters associated with the first RB comprise at least one of the following:
parameters of a PDCP entity associated with the first RB;
parameters of an SDAP entity associated with the first RB;
an identifier of the first RB;
the first RB being a default RB.

39. The method according to claim 38, wherein the parameters of the SDAP entity comprise at least one of the following:
a mapping relationship between a QoS flow and an RB;
a mapping relationship between a sensing protocol PDU type and an RB;
presence of an SDAP header;
absence of an SDAP header;
a default RB.

40. The method according to claim 24, further comprising:
in a case where transmission of the sensing protocol PDU is not required, releasing the first RB; transmitting second indication information to the first communication device, wherein the second indication information is used to indicate release of the first RB, the first communication device being a terminal, and the second communication device being a base station; or,
receiving second indication information transmitted by the first communication device, wherein the second indication information is used to indicate release of the first RB; and releasing the first RB according to the second indication information, the first communication device being a base station, and the second communication device being a terminal.

41. The method according to claim 40, wherein the releasing the first RB comprises:
in a case where the sensing protocol PDU is an SDAP SDU, releasing the first RB and an association between the first RB and an SDAP entity;
in a case where the sensing protocol PDU is a PDCP SDU, releasing the first RB.

42. A communication device, the communication device being a first communication device, comprising: a memory, a transceiver, and a processor;
the memory being configured to store program instructions;
the transceiver being configured to transmit and receive data under control of the processor;
and the processor being configured to read the program instructions from the memory and perform the following operations:
generate a sensing protocol protocol data unit (PDU), wherein the sensing protocol PDU comprises sensing protocol layer information; and
transmit the sensing protocol PDU to a second communication device,
wherein the sensing protocol PDU is transmitted through one of the following transmission manners:
an RRC message;
a service data adaptation protocol (SDAP) service data unit (SDU);
a packet data convergence protocol (PDCP) service data unit (SDU).

43. The communication device according to claim 42, wherein the transceiver is further configured to:
in a case where the sensing protocol PDU is transmitted through an RRC message, transmit the RRC message to the second communication device, the RRC message comprising the sensing protocol PDU; or,
in a case where the sensing protocol PDU is transmitted through an SDAP SDU, transmit an SDAP PDU to the second communication device, the SDAP PDU carrying the SDAP SDU, the sensing protocol PDU being the SDAP SDU; or,
in a case where the sensing protocol PDU is transmitted through a PDCP SDU, transmit a PDCP PDU to the second communication device, the PDCP PDU carrying the PDCP SDU, the sensing protocol PDU being the PDCP SDU.

44. The communication device according to claim 42, wherein the transceiver is further configured to:
transmit the sensing protocol PDU to the second communication device through a first radio bearer (RB), wherein the first RB is a dedicated RB used for transmitting the sensing protocol PDU.

45. The communication device according to claim 42, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

46. The communication device according to claim 45, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

47. The communication device according to claim 44, wherein the processor is further configured to:
add or modify the first RB according to parameters associated with the first RB.

48. The communication device according to claim 47, wherein the processor is further configured to:
in a case where the sensing protocol PDU is an SDAP SDU, establish a PDCP entity associated with the first RB, set PDCP parameters, associate the first RB with an SDAP entity, and set SDAP parameters according to the parameters associated with the first RB; or,
in a case where the sensing protocol PDU is a PDCP SDU, establish a PDCP entity associated with the first RB and set PDCP parameters according to the parameters associated with the first RB.

49. The communication device according to claim 47, wherein the processor is further configured to:
configure PDCP parameters and/or configure SDAP parameters according to the parameters associated with the first RB, wherein the configuring comprises setting or reconfiguring.

50. An information transmission apparatus, comprising:
a first processing unit configured to generate a sensing protocol protocol data unit (PDU), wherein the sensing protocol PDU comprises sensing protocol layer information; and
a first transmitting unit configured to transmit the sensing protocol PDU to a second communication device,
wherein the sensing protocol PDU is transmitted through one of the following transmission manners:
an RRC message;
a service data adaptation protocol (SDAP) service data unit (SDU);
a packet data convergence protocol (PDCP) service data unit (SDU).

51. The apparatus according to claim 50, wherein the first transmitting unit is specifically configured to:
in a case where the sensing protocol PDU is transmitted through an RRC message, transmit the RRC message to the second communication device, the RRC message comprising the sensing protocol PDU; or,
in a case where the sensing protocol PDU is transmitted through an SDAP SDU, transmit an SDAP PDU to the second communication device, the SDAP PDU carrying the SDAP SDU, the sensing protocol PDU being the SDAP SDU; or,
in a case where the sensing protocol PDU is transmitted through a PDCP SDU, transmit a PDCP PDU to the second communication device, the PDCP PDU carrying the PDCP SDU, the sensing protocol PDU being the PDCP SDU.

52. The apparatus according to claim 50, wherein the first transmitting unit is specifically configured to:
transmit the sensing protocol PDU to the second communication device through a first radio bearer (RB), wherein the first RB is a dedicated RB used for transmitting the sensing protocol PDU.

53. The apparatus according to claim 50, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

54. The apparatus according to claim 53, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

55. The apparatus according to claim 52, further comprising:
a second processing unit configured to add or modify the first RB according to parameters associated with the first RB.

56. The apparatus according to claim 55, wherein the second processing unit is specifically configured to:
in a case where the sensing protocol PDU is an SDAP SDU, establish a PDCP entity associated with the first RB, set PDCP parameters, associate the first RB with an SDAP entity, and set SDAP parameters according to the parameters associated with the first RB; or,
in a case where the sensing protocol PDU is a PDCP SDU, establish a PDCP entity associated with the first RB and set PDCP parameters according to the parameters associated with the first RB.

57. The apparatus according to claim 55, wherein the second processing unit is specifically configured to:
configure PDCP parameters and/or configure SDAP parameters according to the parameters associated with the first RB, wherein the configuring comprises setting or reconfiguring.

58. A communication device, the communication device being a second communication device, comprising: a memory, a transceiver, and a processor;
the memory being configured to store program instructions;
the transceiver being configured to transmit and receive data under control of the processor;
and the processor being configured to read the program instructions from the memory and perform the following operations:
receive, through the transceiver, a sensing protocol protocol data unit (PDU) transmitted by a first communication device, wherein the sensing protocol PDU comprises sensing protocol layer information;
wherein the sensing protocol PDU is transmitted through one of the following transmission manners:
an RRC message;
a service data adaptation protocol (SDAP) service data unit (SDU);
a packet data convergence protocol (PDCP) service data unit (SDU).

59. The communication device according to claim 58, wherein the transceiver is further configured to:
in a case where the sensing protocol PDU is transmitted through an RRC message, receive a radio resource control (RRC) message transmitted by the first communication device, the RRC message comprising the sensing protocol PDU; or,
in a case where the sensing protocol PDU is transmitted through an SDAP SDU, receive an SDAP PDU transmitted by the first communication device, the SDAP PDU carrying an SDAP service data unit (SDU), the sensing protocol PDU being the SDAP SDU; or,
in a case where the sensing protocol PDU is transmitted through a PDCP SDU, receive a PDCP PDU transmitted by the first communication device, the PDCP PDU carrying a PDCP SDU, the sensing protocol PDU being the PDCP SDU.

60. The communication device according to claim 58, wherein the transceiver is further configured to:
receive, through a first radio bearer (RB), the sensing protocol PDU transmitted by the first communication device, wherein the first RB is a dedicated RB used for transmitting the sensing protocol PDU.

61. The communication device according to claim 58, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

62. The communication device according to claim 61, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

63. The communication device according to claim 60, wherein the processor is further configured to:
add or modify the first radio bearer (RB) according to parameters associated with the first RB.

64. The communication device according to claim 63, wherein the processor is further configured to:
in a case where the sensing protocol PDU is an SDAP SDU, establish a PDCP entity associated with the first RB, set PDCP parameters, associate the first RB with an SDAP entity, and set SDAP parameters according to the parameters associated with the first RB; or,
in a case where the sensing protocol PDU is a PDCP SDU, establish a PDCP entity associated with the first RB and set PDCP parameters according to the parameters associated with the first RB.

65. The communication device according to claim 63, wherein the processor is further configured to:
configure PDCP parameters and/or configure SDAP parameters according to the parameters associated with the first RB, wherein the configuring comprises setting or reconfiguring.

66. An information transmission apparatus, comprising:
a first receiving unit configured to receive a sensing protocol protocol data unit (PDU) transmitted by a first communication device, wherein the sensing protocol PDU comprises sensing protocol layer information;
wherein the sensing protocol PDU is transmitted through one of the following transmission manners:
an RRC message;
a service data adaptation protocol (SDAP) service data unit (SDU);
a packet data convergence protocol (PDCP) service data unit (SDU).

67. The apparatus according to claim 66, wherein the first receiving unit is specifically configured to:
in a case where the sensing protocol PDU is transmitted through an RRC message, receive a radio resource control (RRC) message transmitted by the first communication device, the RRC message comprising the sensing protocol PDU; or,
in a case where the sensing protocol PDU is transmitted through an SDAP SDU, receive an SDAP PDU transmitted by the first communication device, the SDAP PDU carrying an SDAP service data unit (SDU), the sensing protocol PDU being the SDAP SDU; or,
in a case where the sensing protocol PDU is transmitted through a PDCP SDU, receive a PDCP PDU transmitted by the first communication device, the PDCP PDU carrying a PDCP SDU, the sensing protocol PDU being the PDCP SDU.

68. The apparatus according to claim 66, wherein the first receiving unit is specifically configured to:
receive, through a first radio bearer (RB), the sensing protocol PDU transmitted by the first communication device, wherein the first RB is a dedicated RB used for transmitting the sensing protocol PDU.

69. The apparatus according to claim 66, wherein the sensing protocol layer information comprises sensing control information and sensing data, and the sensing protocol PDU comprises a first type of sensing protocol PDU and a second type of sensing protocol PDU,
wherein the first type of sensing protocol PDU is used for carrying the sensing control information, and the second type of sensing protocol PDU is used for carrying the sensing data.

70. The apparatus according to claim 69, wherein the first type of sensing protocol PDU and the second type of sensing protocol PDU are transmitted through the same transmission manner among the above transmission manners, or the first type of sensing protocol PDU and the second type of sensing protocol PDU are transmitted through different transmission manners among the above transmission manners.

71. The apparatus according to claim 68, further comprising:
a sixth processing unit configured to add or modify the first radio bearer (RB) according to parameters associated with the first RB.

72. The apparatus according to claim 71, wherein the sixth processing unit is specifically configured to:
in a case where the sensing protocol PDU is an SDAP SDU, establish a PDCP entity associated with the first RB, set PDCP parameters, associate the first RB with an SDAP entity, and set SDAP parameters according to the parameters associated with the first RB; or,
in a case where the sensing protocol PDU is a PDCP SDU, establish a PDCP entity associated with the first RB and set PDCP parameters according to the parameters associated with the first RB.

73. The apparatus according to claim 71, wherein the sixth processing unit is specifically configured to:
configure PDCP parameters and/or configure SDAP parameters according to the parameters associated with the first RB, wherein the configuring comprises setting or reconfiguring.

74. A processor-readable storage medium storing a computer program, wherein the computer program, when executed by a processor, is configured to perform the steps of the information transmission method according to any one of claims 1 to 21, or perform the steps of the information transmission method according to any one of claims 22 to 41.
